# EUROPEAN PATENT APPLICATION

(11) **EP 2 431 335 A1**
(43) Date of publication of application: **21.03.2012**
(21) Application number: 10774689.3
(22) Date of filing: 27.04.2010
(51) Int. Cl.: C02F 1/48, F24F 6/00

(54) **ELECTRICAL DISCHARGE UNIT FOR LIQUID TREATMENT, HUMIDITY CONDITIONING APPARATUS, AND WATER HEATER**

(30) Priority: 12.05.2009 JP 2009115493; 30.09.2009 JP 2009226576; 30.09.2009 JP 2009226577; 07.10.2009 JP 2009233138
(71) Applicant: Daikin Industries, Ltd., Osaka-shi, Osaka 530-8323 (JP)
(72) Inventor: SAITOU, Tomoki, Sakai-shi Osaka 591-8511 (JP); OHDOU, Tsunahiro, Sakai-shi Osaka 591-8511 (JP); MOTEGI, Kanji, Sakai-shi Osaka 591-8511 (JP); TANAKA, Toshio, Sakai-shi Osaka 591-8511 (JP)
(74) Representative: Wiedemann, Peter
(86) International application number: PCT/JP2010/003024
(87) International publication number: WO 2010/131429

(57) **Abstract**

A liquid treatment discharge unit includes a pair of electrodes (52, 53) provided in liquid, a high-voltage DC power supply (61) for applying voltage to the pair of electrodes (52, 53) to generate electric discharge between the pair of electrodes (52, 53), and a current density concentration section (70) for increasing a current density of a current path between the pair of electrodes (52, 53).

## Description

### TECHNICAL FIELD

The present invention relates to a liquid treatment discharge unit for generating electric discharge in liquid to purify the liquid, and a humidity control device and a water heater each including the liquid treatment discharge unit.

### BACKGROUND ART

Conventionally, a liquid purification technique has been broadly known, by which an impunity etc. in liquid are removed and the liquid is purified, As the liquid purification technique of this type, Patent Document 1 discloses a liquid treatment device including a discharge unit for generating electric discharge to purify liquid.

In the liquid treatment device of Patent Document 1, the discharge unit is provided, which includes a pair of electrodes which are a discharge electrode and a counter electrode in a path through which water flows. The discharge electrode and the counter electrode are immersed in the liquid. The discharge electrode includes a substrate and a plurality of protrusions extending from the substrate, and is a so-called "sawtooth-shaped electrode." The counter electrode is formed in a flat plate shape, and is arranged so as to face the plurality of protrusions of the discharge electrode.

In the discharge unit, a high-voltage pulse is applied from a pulsed power supply to the pair of electrodes. This generates electric discharge from the protrusions of the discharge electrode toward the counter electrode. In the liquid, active species such as OH radicals are generated in association with the electric discharge. As a result, the active species decompose substances (e.g., harmful substances such as a nitrogen compound and an organic compound) dissolved in the liquid and sterilize the liquid.

### CITATION LIST

### PATENT DOCUMENT

PATENT DOCUMENT 1: Japanese Patent Publication No. 2001-252665

### SUMMARY OF THE INVENTION

### TECHNICAL PROBLEM

As described above, in the discharge unit disclosed in Patent Document 1, the high-voltage pulsed power supply is used as a power supply section. The pulsed power supply includes a power supply circuit having, e.g., a blocking capacitor and a switching element, thereby causing complication of the power supply section and an increase in cost. Meanwhile, in order to simplify the power supply section and reduce a cost, it has been proposed that a high-voltage DC power supply is used as the power supply section of the discharge unit. However, if the DC power supply is used as the power supply section, predetermined voltage is constantly applied to the pair of electrodes. Thus, there is a possibility that current spreads around the electrode in liquid having relatively-high conductivity and therefore desired electric discharge cannot be stably generated.

The present invention has been made in view of the foregoing, and it is an objective of the present invention to propose a liquid treatment discharge unit in which simplification and cost reduction of a power supply section are realized while stably generating electric discharge in liquid, and a humidity control device and a water heater each including the liquid treatment discharge unit.

### SOLUTION TO THE PROBLEM

A first aspect of the invention is intended for a liquid treatment discharge unit including a pair of electrodes (52, 53) provided in liquid and a power supply section (61) configured to apply voltage to the pair of electrodes (52, 53) to generate electric discharge between the pair of electrodes (52, 53). In the liquid treatment discharge unit, the power supply section (61) is a high-voltage DC power supply (61). The liquid treatment discharge unit includes a current density concentration section (70) for increasing a current density of a current path between the pair of electrodes (52, 53).

In the first aspect of the invention, voltage is applied from the power supply section (61) to the pair of electrodes (52, 53), thereby generating the electric discharge between the pair of electrodes (52, 53). This generates active species such as OH radicals. Substances to be treated (e.g., harmful substances or bacteria) contained in the liquid is oxidized/decomposed by the active species.

In the present invention, the high-voltage DC power supply (61) is used as the power supply section for applying voltage to the pair of electrodes (52, 53). Thus, simplification and cost reduction of the power supply section can be realized as compared to a pulsed power supply of the prior art. Conversely, if the high-voltage DC power supply (61) is used as the power supply section, an electric density dispersion is likely to occur around the pair of electrodes (52, 53). However, in the liquid treatment discharge unit of the present invention, the current density concentration section (70) for increasing the current density of the current path between the pair of electrodes (52, 53) is provided. Thus, even if the DC power supply (61) is used, spreading of current around the pair of electrodes (52, 53) can be avoided while increasing the density of the current path. As a result, desired electric discharge can be generated between the pair of electrodes (52, 53).

A second aspect of the invention is intended for the liquid treatment discharge unit of the first aspect of the invention, in which the pair of electrodes (52, 53) is configured so that air bubbles are generated by Joule heat generated in association with the electric discharge of the pair of electrodes (52, 53) and electric discharge is also generated in the air bubbles.

In the second aspect of the invention, voltage is applied from the power supply section (61) to the pair of electrodes (52, 53), thereby generating the electric discharge between the pair of electrodes (52, 53). In such a state, the Joule heat is generated due to the current application in the current path between the pair of electrodes (52, 53). Liquid is vaporized by the Joule heat between the pair of the electrodes (52, 53), thereby generating the air bubbles. When voltage is applied to the pair of electrodes (52, 53), the electric discharge is generated in the air bubbles, and active species such as OH radicals are generated in the air bubbles. Substances to be treated (e.g., harmful substances or bacteria) contained in the liquid are oxidized/decomposed by the active species.

In the present invention, the high-voltage DC power supply (61) is used as the power supply section (61) for applying voltage to the pair of electrodes (52, 53). That is, in the discharge unit of the prior art, a high-voltage pulse is applied from a high-voltage pulsed power supply to a pair of electrodes. On the other hand, in the discharge unit of the present invention, DC voltage is applied from the high-voltage DC power supply (61) to the pair of electrodes (52, 53). Thus, in the present invention, occurrence of shock waves in the liquid in association with the electric discharge is reduced, thereby stabilizing the air bubbles generated in the liquid.

A third aspect of the invention is intended for the liquid treatment discharge unit of the first aspect of the invention, in which the current density concentration section is configured by an insulating member (50, 71, 71a, 75, 77) arranged near the current path between the pair of electrodes (52, 53).

In the third aspect of the invention, the insulating member (50, 71, 71a, 75, 77) is provided as the current density concentration section near the pair of electrodes (52, 53). This reduces spreading of current from the pair of electrodes (52, 53) to the insulating member (50, 71, 71a, 75, 77), thereby increasing the current density of the current path between the pair of electrodes (52, 53).

A fourth aspect of the invention is intended for the liquid treatment discharge unit of the third aspect of the invention, in which the insulating member is a cover member (71) covering part of at least one (52) of the pair of electrodes (52, 53).

In the liquid treatment discharge unit of the fourth aspect of the invention, the insulating cover member (71) is provided as the current density concentration section. The cover member (71) is arranged so as to cover part of one of the pair of electrodes (52, 53) or part of both of the pair of electrodes (52, 53). This reduces spreading of current toward a portion of the electrode (52), which is covered by the cover member (71), thereby increasing the current density of the current path between the pair of electrodes (52, 53).

A fifth aspect of the invention is intended for the liquid treatment discharge unit of the fourth aspect of the invention, in which the cover member (71) is formed in a cylindrical shape opening at at least one end in an axial direction and the electrode (52) covered by the cylindrical cover member (71) is formed in a rod shape fitted into the cylindrical cover member (71).

In the fifth aspect of the invention, the rod-shaped electrode (52) is fitted into the cylindrical cover member (71). Thus, spreading of current toward an outer circumferential side of the electrode (52) can be avoided while increasing the current density on a tip end side of the electrode (52).

A sixth aspect of the invention is intended for the liquid treatment discharge unit of the fifth aspect of the invention, in which the rod-shaped electrode (52) is arranged so that a tip end of the electrode (52) is inwardly recessed relative to an opening plane (72b) on one end side of the cylindrical cover member (71).

In the sixth aspect of the invention, the tip end of the rod-shaped electrode (52) is in the position inwardly recessed relative to the opening plane (72b) of the cylindrical cover member (71). This forms an aperture space for reducing a cross-sectional area of the current path on an inner side relative to the opening plane (72b) of the cover member (71). As a result, the current density is further increased near a tip end portion of the rod-shaped electrode (52).

A seventh aspect of the invention is intended for the liquid treatment discharge unit of the fourth aspect of the invention, in which a plurality of through-holes (74) are formed in the cover member (71) as openings.

In the seventh aspect of the invention, the plurality of through-holes (74) are provided in the cover member (71) covering part of the electrode (52), thereby reducing an increase in temperature of the cover member (71). That is, Joule heat is generated due to an increase in current density in each of the through-holes (74), and therefore it is likely to increase a liquid temperature near each of the through-holes (74). However, in the present invention, the plurality of through-holes (74) are formed in the cover member (71), thereby deconcentrating an influence of the Joule heat. As a result, the increase in temperature of the cover member (71) is reduced.

An eighth aspect of the invention is intended for the liquid treatment discharge unit of the third aspect of the invention, in which the insulating member is a blocking member (71a, 77) arranged so as to separate the pair of electrodes (52, 53) and provided with a through-hole (74) forming the current path between the pair of electrodes (52, 53) as an opening.

In the liquid treatment discharge unit of the eighth aspect of the invention, the insulating blocking member (71a, 77) is provided as the current density concentration section. The blocking member (71a, 77) is arranged between the two electrodes (52, 53) so as to separate the two electrodes (52, 53). In addition, in the blocking member (71a, 77), the through-hole (74) is formed in order to form the current path between the two electrodes (52, 53). That is, the electric discharge is allowed between the pair of electrodes (52, 53) through the through-hole (74) of the blocking member (71a, 77). The foregoing configuration increases the current density in the current path inside the through-hole (74) of the blocking member (71a, 77).

A ninth aspect of the invention is intended for the liquid treatment discharge unit of the fifth aspect of the invention, in which the cover member (71) is arranged so that an opening on one end side of the cover member (71) faces downward.

In the ninth aspect of the invention, the opening on the one end side of the cover member (71) faces downward. Thus, when air bubbles are generated near the opening of the cover member (71) in association with the electric discharge, the air bubbles are accumulated between the tip end portion of the electrode (52) and an opening plane (72a) of the cover member (71). As a result, the air bubbles can be stably held below the cover member (71).

A tenth aspect of the invention is intended for the liquid treatment discharge unit of the third aspect of the invention, in which the insulating member (50) is provided with at least one opening (56) through which part of the discharge electrode (52) is exposed.

In the tenth aspect of the invention, the at least one opening (56) is formed in the insulating member (55) covering the discharge electrode (52). Thus, part of a surface of the discharge electrode (52) is exposed to the liquid through the opening (56). When the electric discharge is generated, the electric discharge is generated from the exposure portion of the discharge electrode (52) to the counter electrode (53). As a result, field intensity between the discharge electrode (52) and the counter electrode (53) is increased.

An eleventh aspect of the invention is intended for the liquid treatment discharge unit of the tenth aspect of the invention, in which an exposure portion (52a) of the discharge electrode (52) is positioned on an inner side relative to an end plane of the opening (56) of the insulating member (55).

In the eleventh aspect of the invention, the exposure portion (52a) of the discharge electrode (52) is positioned so as to be inwardly recessed relative to the end plane of the opening (56) of the insulating member (55). Thus, when the electric discharge is generated from the exposure portion (52a) of the discharge electrode (52) to the counter electrode (53), an electric line of force in association with the electric discharge is formed along an inner wall of the opening (56) of the insulating member (55). This further increases the field intensity when the electric discharge is generated, thereby increasing an amount of active species to be generated in association with the electric discharge.

A twelfth aspect of the invention is intended for the liquid treatment discharge unit of the tenth aspect of the invention, in which an exposure portion (52a) of the discharge electrode (52) is positioned on the substantially same plane as an end plane of the opening (56) of the insulating member (55).

In the twelfth aspect of the invention, the exposure portion (52a) of the discharge electrode (52) is positioned on the substantially same plane as the end plane of the opening (56) of the insulating member (55). This suppresses a contact area of the exposure portion (52a) of the discharge electrode (52) and the liquid to the minimum. Thus, spreading of discharge current can be avoided, thereby further increasing the field intensity when the electric discharge is generated. As a result, the amount of active species to be generated in association with the electric discharge is increased.

The thirteenth aspect of the invention is intended for the liquid treatment discharge unit of the tenth aspect of the invention, in which an exposure portion (52a) of the discharge electrode (52) is positioned on an outer side relative to an end plane of the opening (56) of the insulating member (55).

In the thirteenth aspect of the invention, the exposure portion (52a) of the discharge electrode (52) is positioned so as to protrude toward the outer side relative to the end plane of the opening (56) of the insulating member (55). This reduces degradation of a portion of the insulating member (55) near the opening (56) due to an influence of the electric discharge generated from the exposure portion (52a) of the discharge electrode (52) to the counter electrode (53).

A fourteenth aspect of the invention is intended for the liquid treatment discharge unit of the tenth aspect of the invention, in which a plurality of openings (56) are formed in the insulating member (50).

In the fourteenth aspect of the invention, the plurality of openings (56) are formed in the insulating member (55). Thus, when the electric discharge is generated, the electric discharge is generated from each of exposure portions of the discharge electrode (52) through each of the plurality of openings (56) to the counter electrode (53). As a result, many high-field electric discharges can be simultaneously generated, thereby increasing the amount of active species to be generated in association with the electric discharge.

A fifteenth aspect of the invention is intended for the liquid treatment discharge unit of the fourteenth aspect of the invention, in which the discharge electrode (52) is forked in a rod shape or a linear shape, and the insulating member (55) includes an outer circumferential covering portion (55a) covering an outer circumferential surface of the discharge electrode (52), and a tip end covering portion (55b) covering a tip end surface of the discharge electrode (52) and provided with the plurality of openings (56).

In the fifteenth aspect of the invention, the discharge electrode (52) is formed in the rod shape or the linear shape. The outer circumferential surface of the discharge electrode (52) is covered by the outer circumferential covering portion (55a), and the tip end surface of the discharge electrode (52) is covered by the tip end covering portion (55b). The plurality of openings (56) are formed in the tip end covering portion (55b). The tip end surface of the discharge electrode (52) is exposed to the liquid through the plurality of openings (56). Thus, when the electric discharge is generated, the electric discharge is generated from each of a plurality of exposure portions (52a) of the tip end surface to the counter electrode (53). As a result, many high-field electric discharges can be simultaneously generated, thereby increasing the amount of active species to be generated in association with the electric discharge.

A sixteenth aspect of the invention is intended for the liquid treatment discharge unit of the fourteenth aspect of the invention, in which the discharge electrode (52) is formed in a rod shape or a linear shape, and the insulating member (55) includes an outer circumferential covering portion (55a) covering an outer circumferential surface of the discharge electrode (52) and provided with the plurality of openings (56), and a tip end covering portion (55b) covering a tip end surface of the discharge electrode (52).

In the sixteenth aspect of the invention, the discharge electrode (52) is formed in the rod shape or the linear shape. The outer circumferential surface of the discharge electrode (52) is covered by the outer circumferential covering portion (55a), and the tip end surface of the discharge electrode (52) is covered by the tip end covering portion (55b). The plurality of openings (56) are formed in the tip end covering portion (55b). The outer circumferential surface of the discharge electrode (52) is exposed to the liquid through the plurality of openings (56). Thus, when the electric discharge is generated, the electric discharge is generated from each of a plurality of exposure portions (52a) of the outer circumferential surface to the counter electrode (53). As a result, many high-field-intensity electric discharges can be simultaneously generated, thereby increasing the amount of active species to be generated in association with the electric discharge.

A seventeenth aspect of the invention is intended for the liquid treatment discharge unit of any one of the fifth to sixteenth aspects of the invention, in which an opening width of the opening (50, 72a, 74, 75a, 75b) is equal to or less than 0.5 mm. Note that the shape of the "opening" is not limited to a true circular shape, and may be, e.g., an oval shape, a square shape, and a rectangular shape. In addition, the "opening width" means an opening width (maximum opening width) in a widest portion of an inner edge portion of the opening.

In the seventeenth aspect of the invention, the opening width of the opening (72a, 74) is set to equal to or less than 0.5 mm. If the opening width of the opening (72a, 74) is greater than 0.5 mm, current spreading from the tip end of the discharge electrode (52) to water is increased. As a result, the current density of the current path between the pair of electrodes (52, 53) is decreased. However, in the present invention, since the opening width of the opening (72a, 74) is limited to equal to or less than 0.5 mm, the current spreading from the discharge electrode (52) to water is reduced, and therefore the current density of the current path between the pair of electrodes (52, 53) can be increased.

An eighteenth aspect of the invention is intended for the liquid treatment discharge unit of any one of the fifth to sixteenth aspects of the invention, in which an opening width of the opening (50, 72a, 74, 75a, 75b) is equal to or greater than 0.02 mm.

In the eighteenth aspect of the invention, the opening width of the opening (72a, 74) is set to equal to or greater than 0.02 mm. Thus, the opening (72a, 74) can be relatively easily formed.

A nineteenth aspect of the invention is intended for the liquid treatment discharge unit of the third aspect of the invention, in which the insulating member is a case (75) in which the pair of electrodes (52, 53) are accommodated and a communication port (75a, 75b) through which the liquid can circulate is formed.

In the liquid treatment discharge unit of the nineteenth aspect of the invention, the insulating case (75) is provided as the current density concentration section. The pair of electrodes (52, 53) are accommodated in the case (75). In addition, the communication port (75a, 75b) through which the liquid can circulate is formed in the case (75). Thus, the case (75) is filled with the liquid, and the pair of electrodes (52, 53) are immersed in the liquid. In the present invention, since the pair of electrodes (52, 53) are surrounded by the insulating case (75), prevention of spreading of current from the pair of electrodes (52, 53) to a surround can be ensured. As a result, an increase in current density of the current path between the pair of electrodes (52, 53) can be ensured.

A twentieth aspect of the invention is intended for the liquid treatment discharge unit of the third aspect of the invention, in which the insulating member (50, 71, 71a, 75, 77) is made of a ceramic material.

In the twentieth aspect of the invention, the insulating member (50, 71, 71a, 75, 77) is made of the ceramic material. Since the ceramic material has excellent heat resistance and reactive resistance, degradation of the insulating member (50, 71, 71a, 75, 77) in association with the electric discharge can be prevented.

A twenty-first aspect of the invention is intended for the liquid treatment discharge unit of the first aspect of the invention, in which the current density concentration section (70) is an air bubble generation section (80) configured to supply air bubbles to the current path between the pair of electrodes (52, 53).

In the liquid treatment discharge unit of the twenty-first aspect of the invention, the air bubble generation section (80) is provided as the current density concentration section. The air bubble generation section (80) supplies the air bubbles to the current path between the pair of electrodes (52, 53). Thus, a substantial water cross-sectional area in the current path between the pair of electrodes (52, 53) is decreased. As a result, the current density of the current path between the pair of electrodes (52, 53) can be increased.

A twenty-second aspect of the invention is intended for the liquid treatment discharge unit of the second aspect of the invention, in which an air bubble holding section (84) configured to hold air bubbles generated in association with the electric discharge.

In the twenty-second aspect of the invention, the air bubbles generated in association with the electric discharge are held by the air bubble holding section (84). This prevents upward escaping of air bubbles in liquid.

A twenty-third aspect of the invention is intended for the liquid treatment discharge unit of the second aspect of the invention, which further includes a heat insulating member (85) arranged so as to surround the current path between the pair of electrodes (52, 53).

In the twenty-third aspect of the invention, the current path between the pair of electrodes (52, 53) is surrounded by the heat insulating member (85). Thus, in the current path inside the heat insulating member (85), an increase in liquid temperature due to the Joule heat is accelerated. As a result, liquid vaporization is accelerated, and generation of air bubbles is also accelerated.

A twenty-fourth aspect of the invention is intended for the liquid treatment discharge unit of any one of the first to third aspects of the invention, in which the power supply section (61) provides a potential difference to the pair of electrodes (52, 53) so that potential of the counter electrode (53) is lower than that of the discharge electrode (52).

In the twenty-fourth aspect of the invention, the potential of the discharge electrode (52) is lower than that of the counter electrode (53), thereby generating so-called "negative electric discharge" from the discharge electrode (52) to the counter electrode (53). This allows electrons to move toward the counter electrode (53) which is at high potential when the electric discharge is generated. However, the electrons do not move to the discharge electrode (52). In such a manner, avoidance of concentration and collision of the electrons in a portion of the surface of the discharge electrode (52), which is exposed to the counter electrode (53) can be ensured. That is, only part of the discharge electrode (52) is covered by the insulating member (55) and is exposed. Thus, if positive electric discharge is generated from the discharge electrode (52) to the counter electrode (53), the electrons are concentrated and collided in the exposure portion of the discharge electrode (52), and wear damage/degradation of the exposure portion are occurred for a relatively-short period of time. This causes a problem that the desired electric discharge cannot be continuously and stably generated from the discharge electrode (52). On the other hand, in the present invention, since the electrons do not move to the exposure portion of the discharge electrode (52), the wear damage/degradation of the exposure portion can be prevented while continuing the stable generation of the electric discharge.

A twenty-fifth aspect of the invention is intended for the liquid treatment discharge unit of any one of the first to third aspects of the invention, in which streamer discharge is generated from the discharge electrode (52) to the counter electrode (53).

In the twenty-fifth aspect of the invention, streamer discharge is generated from the discharge electrode (52) to the counter electrode (53). The streamer discharge is electric discharge generated with a so-called "electronic avalanche," and high-density active species can be generated by relatively-low power as compared to, e.g., corona discharge.

A twenty-sixth aspect of the invention is intended for a humidity control device including a storage section (41) configured to store water; a humidification section (43) configured to impart the water of the storage section (41) to air; and a liquid treatment discharge unit (50) configured to purify the water of the storage section (41). In the humidity control device, the liquid treatment discharge unit (50) is the liquid treatment discharge unit of any one of the first to third aspect of the invention.

In the humidity control device of the twenty-sixth aspect of the invention, water stored in the storage section (41) is imparted to air by the humidification section (43), thereby performing humidification of, e.g., an indoor space. When the electric discharge is generated in the liquid treatment discharge unit (50), the water of the storage section (41) is purified by the active species generated in association with the electric discharge. In the liquid treatment discharge unit (50) of the present invention, since the high-voltage DC power supply (61) is used as the power supply section, the simplification and cost reduction of the power supply section are realized. In addition, the current density of the current path between the pair of electrodes (52, 53) is increased by the current density concentration section (70), thereby realizing the stable generation of the electric discharge.

A twenty-seventh aspect of the invention is intended for a humidity control device including a dehumidification section (31) configured to dehumidify air by trapping moisture in the air; a storage section (41) configured to collect the water trapped by the dehumidification section (31); and a liquid treatment discharge unit (50) configured to purify the water of the storage section (41). In the humidity control device, the liquid treatment discharge unit (50) is the liquid treatment discharge unit (50) of any one of the first to third aspects of the invention.

In the twenty-seventh aspect of the invention, moisture of air is trapped by the dehumidification section (31), thereby dehumidifying the air. The water trapped by the dehumidification section (31) is collected in the storage section (41). When the electric discharge is generated in the liquid treatment discharge unit (50), the water of the storage section (41) is purified by the active species generated in association with the electric discharge. In the liquid treatment discharge unit (50) of the present invention, since the high-voltage DC power supply (61) is used as the power supply section, the simplification and cost reduction of the power supply section are realized. In addition, the current density of the current path between the pair of electrodes (52, 53) is increased by the current density concentration section (70), thereby realizing the stable generation of the electric discharge.

A twenty-eighth aspect of the invention is intended for a water heater including a water supply tank (91) configured to store heated water; and a liquid treatment discharge unit (50) configured to purify the water of the water supply tank (91). In the water heater, the liquid treatment discharge unit (50) is the liquid treatment discharge unit (50) of any one of the first to third aspects of the invention.

In the twenty-eighth aspect of the invention, heated water (hot water) is stored in the water supply tank (91). When the electric discharge is generated in the liquid treatment discharge unit (50), the water of the storage section (41 is purified by the active species generated in association with the electric discharge. In the liquid treatment discharge unit (50) of the present invention, since the high-voltage DC power supply (61) is used as the power supply section, the simplification and cost reduction of the power supply section are realized. In addition, the current density of the current path between the pair of electrodes (52, 53) is increased by the current density concentration section (70), thereby realizing the stable generation of the electric discharge.

### ADVANTAGES OF THE INVENTION

In the present invention, the high-voltage DC power supply (61) is used as the power supply section for applying voltage to the pair of electrodes (52, 53). Thus, the simplification and cost reduction of the power supply section can be realized. In addition, in, e.g., the pulsed power supply of the prior art, it is likely that shock waves or noise are/is caused in association with the electric discharge. On the other hand, in the present invention, occurrence of such shock waves or noise can be reduced.

In addition, in the present invention, since the current density concentration section (70) is provided, the current density of the current path between the pair of electrodes (52, 53) can be increased. Thus, the spreading of current around the pair of electrodes (52, 53) can be avoided, and the desired electric discharge can be generated between the pair of electrodes (52, 53). As a result, the amount of active species to be generated in the liquid in association with the electric discharge can be increased, thereby improving purification efficiency of the liquid.

In the second aspect of the invention, DC voltage is applied from the high-voltage DC power supply (61) to the pair of electrodes (52, 53), thereby generating the electric discharge in the air bubbles. Thus, in the pulsed power supply, shock waves are caused in water, and it is likely that the air bubbles are damaged. On the other hand, in the present invention, since few shock waves are caused, the air bubbles are stabilized. Consequently, the electric discharge can be stably generated in the air bubbles.

In addition, the DC power supply (61) is used, thereby realizing the cost reduction of the power supply section as compared to the pulsed power supply. Further, the DC power supply (61) is used, thereby reducing noise caused when the electric discharge is generated as compared to the pulsed power supply.

In the third aspect of the invention, the insulating member (71, 71a, 75, 77) is provided near the pair of electrodes (52, 53), and therefore the current density of the current path between the pair of electrodes (52, 53) can be increased with a relatively-simple structure.

In the fourth aspect of the invention, part of the pair of electrodes (52, 53) is covered by the insulating cover member (71). Thus, the prevention of spreading of current around the pair of electrodes (52, 53) can be ensured by the cover member (71).

In the fifth aspect of the invention, the rod-shaped electrode (52) is fitted into the cylindrical cover member (71). This increases the current density of the current path near the opening (72a) of the cover member (71).

In the sixth aspect of the invention, the tip end surface (52a) of the electrode (52) is inwardly recessed relative to the opening plane (72b) on the one end side of the cylindrical cover member (71). This forms the aperture space for reducing the cross-sectional area of the current path between the opening plane (72b) of the cover member (71) and the tip end surface (52a) of the electrode (52). Thus, the aperture space can ensure the further increase in current density of the current path. As a result, the electric discharge between the pair of electrodes (52, 53) is further stabilized.

In the seventh aspect of the invention, since the plurality of through-holes (74) are formed in the cover member (71), the current density inside each of the through-holes (74) can be increased. In such a state, the Joule heat generated in the current path is dispersed to each of the through-holes (74). Thus, the increase in temperature of the cover member (71) when the electric discharge is generated can be reduced. As a result, the degradation of the cover member (71) due to the increase in temperature can be prevented, thereby improving durability of the cover member (71).

In the ninth aspect of the invention, the opening (72a) on the one end side of the engagement groove (72) of the cover member (71) faces downward. Thus, air bubbles generated near the opening plane (72a) can be held below the tip end of the electrode (52). As a result, the upward escaping of air bubbles generated in liquid can be avoided, thereby more stably generating the electric discharge in the air bubbles.

According to the tenth aspect of the invention, the opening (56) is formed in the insulating member (55) covering the discharge electrode (52), and therefore part of the insulating member (55) can be exposed to the liquid with the relatively-simple structure.

According to the eleventh aspect of the invention, since the exposure portion (52a) of the discharge electrode (52) is positioned on the inner side relative to the end plane of the opening (56) of the insulating member (55), the relatively-high-density electric line of force can be formed along the inner wall of the opening (56) while generating the electric discharge. Thus, the field intensity from the exposure portion (52a) of the discharge electrode (52) to the counter electrode (53) is increased, thereby generating a large amount of high-density active species.

According to the twelfth aspect of the invention, since the end plane of the opening (56) of the insulating member (55) and the exposure portion (52a) of the discharge electrode (52) are positioned on the same plane, the contact area of the discharge electrode (52) and the liquid can be suppressed to the minimum. Thus, leakage current from the discharge electrode (52) to the liquid can be suppressed to the minimum. Consequently, liquid purification performance can be further improved by increasing the field intensity, and miniaturization and cost reduction of the power supply section (61) can be realized in association with reduction of the leakage current.

According to the thirteenth aspect of the invention, since the exposure portion (52a) of the discharge electrode (52) is positioned on the outer side relative to the end plane of the opening (56) of the insulating member (55), degradation of the insulating member (55) around the exposure portion (52a) in association with the electric discharge from the exposure portion (52a) can be reduced. In addition, since the discharge electrode (52) protrudes beyond the insulating member (55), field density in the tip end portion of the protrusion can be increased, and the generation of the active species can be further accelerated.

In the fourteenth aspect of the invention, many electric discharges can be simultaneously generated from the discharge electrode (52) through the plurality of openings (56). In addition, since the fields of the electric discharges are concentrated, a large amount of high-density active species can be generated in the liquid.

In the fifteenth aspect of the invention, the plurality of openings (56) are formed in the tip end covering portion (55b) covering the tip end surface of the rod-shaped discharge electrode (52). Thus, many electric discharges can be simultaneously generated from the tip end surface of the discharge electrode (52) through the plurality of openings (56). In addition, since the fields of the electric discharges are concentrated, a large amount of high-density active species can be generated in the liquid.

Similarly, in the sixteenth aspect of the invention, the plurality of openings (56) are formed in the outer circumferential covering portion (55a) covering the outer circumferential surface of the rod-shaped discharge electrode (52). Thus, many electric discharges can be simultaneously generated from the outer circumferential surface of the discharge electrode (52) through the plurality of openings (56). In addition, since the fields of the electric discharges are concentrated, a large amount of high-density active species can be generated in the liquid.

In particular, as in the seventeenth aspect of the invention, by setting the opening width of the opening (72a, 74) to equal to or less than 0.5 mm, the reduction of the spreading of current around the pair of electrodes (52, 53) can be ensured, and the electric discharge can be stably generated. In addition, as in the eighteenth aspect of the invention, by setting the opening width of the opening (72a, 74) to equal to or less than 0.02 mm, workability of the cover member (71) can be improved.

In the nineteenth aspect of the invention, the pair of electrodes (52, 53) are accommodated in the insulating case (75). Thus, since the avoidance of spreading of current around the pair of electrodes (52, 53) can be ensured, the electric discharge can be stably generated between the pair of electrodes (52, 53),

In the twentieth aspect of the invention, the insulating member (71, 71a, 75, 77) is made of the ceramic material. Thus, the oxidation/melting of the insulating member (71, 71a, 75, 77) in association with the electric discharge can be avoided, thereby improving the durability of the insulating member (71, 71a, 75,77).

In the twenty-first aspect of the invention, air bubbles are supplied to the current path between the pair of electrodes (52, 53), thereby easily increasing the current density of the current path. In addition, by supplying the air bubbles as in the foregoing, the electric discharge is also generated in the air bubbles in association with insulation breakdown of gas. Thus, the active species such as OH radicals can be also generated from the air bubbles.

In the twenty-second aspect of the invention, since the air bubble holding plate (84) for holding generated air bubbles is provided, the upward escaping of air bubbles generated in liquid can be avoided. Thus, the electric discharge can be more stably generated in the air bubbles.

In the twenty-third aspect of the invention, since the current path between the pair of electrodes (52, 53) is surrounded by the heat insulating member (85), the increase in liquid temperature in the current path can be further accelerated, and therefore the generation of air bubbles can be accelerated. As a result, the electric discharge can be stably generated in the air bubbles.

According to the twenty-fourth aspect of the invention, since the so-called "negative electric discharge" is generated from the discharge electrode (52) to the counter electrode (53), the prevention of concentration and collision of electrons in the exposure portion of the discharge electrode (52) can be ensured. Thus, the avoidance of wear damage/degradation of the exposure portion of the discharge electrode (52) is ensured, thereby continuously and stably generating the electric discharge.

According to the twenty-fifth aspect of the invention, the streamer discharge is generated, thereby providing the liquid treatment discharge unit having relatively-low power consumption and high liquid purification efficiency.

In the twenty-sixth aspect of the invention, in the humidity control device for at least humidifying air, the stable generation of electric discharge in air bubbles of water can be ensured. In addition, in the twenty-seventh aspect of the invention, in the humidity control device for at least dehumidifying air, the stable generation of electric discharge in air bubbles of water can be ensured. In the twenty-eighth aspect of the invention, in the water heater for supplying hot water, the stable generation of electric discharge in air bubbles of water can be ensured.

### BRIEF DESCRIPTION OF THE DRAWINGS

[FIG. 1] FIG. 1 is a perspective view illustrating an entire configuration of a humidity control device of a first embodiment.
[FIG. 2] FIG. 2 is a schematic configuration diagram illustrating an internal configuration of the humidity control device of the first embodiment.
[FIG, 3] FIG. 3 is a schematic configuration diagram of a discharge unit of the first embodiment.
[FIG. 4] FIG. 4 is a top view near a discharge electrode of the discharge unit of the first embodiment.
[FIG. 5] FIG. 5 is a graph illustrating a current-voltage property for three discharge units having different opening widths of an opening of a cover member.
[FIG. 6] FIG. 6 is a schematic configuration diagram of a discharge unit of a first variation of the first embodiment.
[FIG. 7] FIG. 7 is a schematic configuration diagram of a discharge unit of a second variation of the first embodiment.
[FIG. 8] FIG. 8 is a schematic configuration diagram of a discharge unit of a third variation of the first embodiment.
[FIG. 9] FIG. 9 is a schematic configuration diagram of a discharge unit of a fourth variation of the first embodiment.
[FIG. 10] FIG. 10 is a schematic configuration diagram of a discharge unit of a fifth variation of the first embodiment.
[FIG. 11] FIG. 11 is a schematic configuration diagram of a discharge unit of a sixth variation of the first embodiment.
[FIG. 12] FIG. 12 is a schematic configuration diagram of a discharge unit of a seventh variation of the first embodiment.
[FIG. 13] FIG. 13 is a schematic configuration diagram of a discharge unit of an eighth variation of the first embodiment.
[FIG. 14] FIG. 14 is a schematic configuration diagram of a discharge unit of a ninth variation of the first embodiment.
[FIG. 15] FIG. 15 is a schematic configuration diagram of a discharge unit of a second embodiment.
[FIG. 16] FIG. 16 is an enlarge configuration diagram near an air bubble generation region of the discharge unit of the second embodiment.
[FIG. 17] FIG. 17 is a schematic configuration diagram of a discharge unit of a first variation of the second embodiment.
[FIG. 18] FIG. 18 is a schematic configuration diagram of a discharge unit of a second variation of the second embodiment.
[FIG. 19] FIG. 19 is a schematic configuration diagram of a discharge unit of a third variation of the second embodiment.
[FIG. 20] FIG. 20 is a schematic configuration diagram of a discharge unit of a fourth variation of the second embodiment.
[FIG. 21] FIG. 21 is a schematic configuration diagram of a discharge unit of a fifth variation of the second embodiment.
[FIG. 22] FIG. 22 is a schematic configuration diagram of a discharge unit of a sixth variation of the second embodiment.
[FIG. 23] FIG. 23 is a schematic configuration diagram of a discharge unit of a seventh variation of the second embodiment.
[FIG. 24] FIG. 24 is a schematic configuration diagram of a discharge unit of an eighth variation of the second embodiment.
[FIG. 25] FIG. 25 is a schematic configuration diagram of a discharge unit of a third embodiment.
[FIG. 26] FIG. 26 is a schematic configuration diagram of a discharge unit of a first variation of the third embodiment.
[FIG. 27] FIG. 27 is a schematic configuration diagram of a discharge unit of a second variation of the third embodiment.
[FIG. 28] FIG. 28 is a schematic configuration diagram of a discharge electrode of a third variation of the third embodiment. FIG. 28(A) is a longitudinal cross-sectional view of the discharge electrode. FIG. 28(B) is a side view of the discharge electrode as viewed from a side closer to a counter electrode.
[FIG. 29] FIG. 29 is a schematic configuration diagram of a discharge electrode of a fourth variation of the third embodiment. FIG. 29(A) is a longitudinal cross-sectional view of the discharge electrode. FIG. 29(B) is a side view of the discharge electrode as viewed from a side closer to a counter electrode.
[FIG. 30] FIG. 30 is a schematic configuration diagram of a discharge unit of a fifth variation of the third embodiment.
[FIG. 31] FIG. 31 is a perspective view illustrating a schematic configuration of a discharge electrode of the fifth variation of the third embodiment.
[FIG. 32] FIG. 32 is a perspective view illustrating a schematic configuration of a discharge unit of a sixth variation of the third embodiment.
[FIG. 33] FIG. 33 is a schematic configuration diagram of a discharge unit of a seventh variation of the third embodiment.
[FIG. 34] FIG. 34 is a schematic configuration diagram of a discharge unit of a first example of the third embodiment.
[FIG. 35] FIG. 35 is a schematic configuration diagram of a discharge unit of a second example of the third embodiment.
[FIG. 36] FIG. 36 is a schematic configuration diagram of a discharge unit of a third example of the third embodiment.
[FIG. 37] FIG. 37 is a schematic configuration diagram illustrating an internal configuration of a humidity control device of a fourth embodiment.
[FIG. 38] FIG. 38 is a schematic configuration diagram of a water heater of a fifth embodiment.
[FIG. 39] FIG. 39 is a schematic configuration diagram of a hot-water supply system of a sixth embodiment.
[FIG. 40] FIG. 40 is a schematic configuration diagram of a discharge unit of the sixth embodiment.
[FIG. 41] FIG. 41 is a schematic configuration diagram of a discharge unit of another example of the sixth embodiment.
[FIG. 42] FIG. 42 is a top view near a discharge electrode of a discharge unit of other embodiment (first example).
[FIG. 43] FIG. 43 is a top view near a discharge electrode of a discharge unit of other embodiment (second example).

### DESCRIPTION OF EMBODIMENTS

Embodiments of the present invention will be described below in detail with reference to the drawings. Note that the embodiments described below will be set forth merely for purposes of preferred examples in nature, and are not intended to limit applications and use of the invention.

### <<First Embodiment of the Invention>>

A humidity control device (10) of a first embodiment of the present invention is configured so that a humidification operation for humidifying air can be performed. The humidity control device (10) includes various air purification units for purifying air.

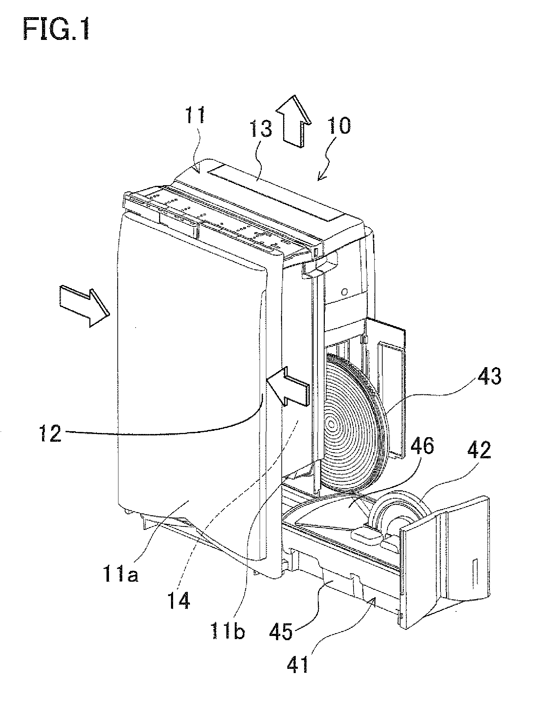

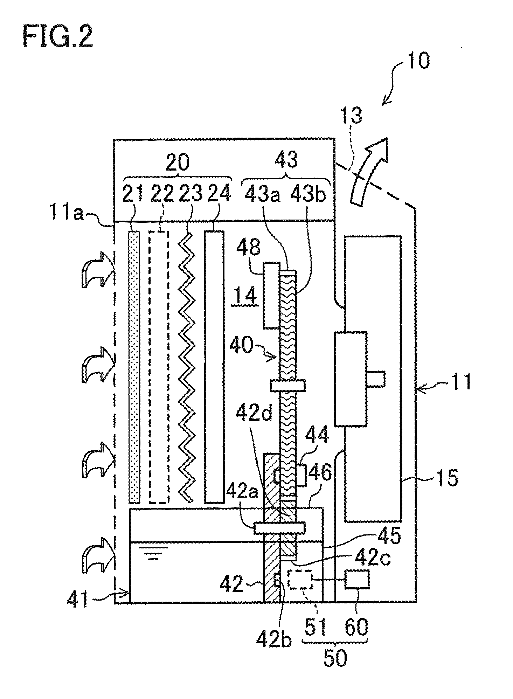

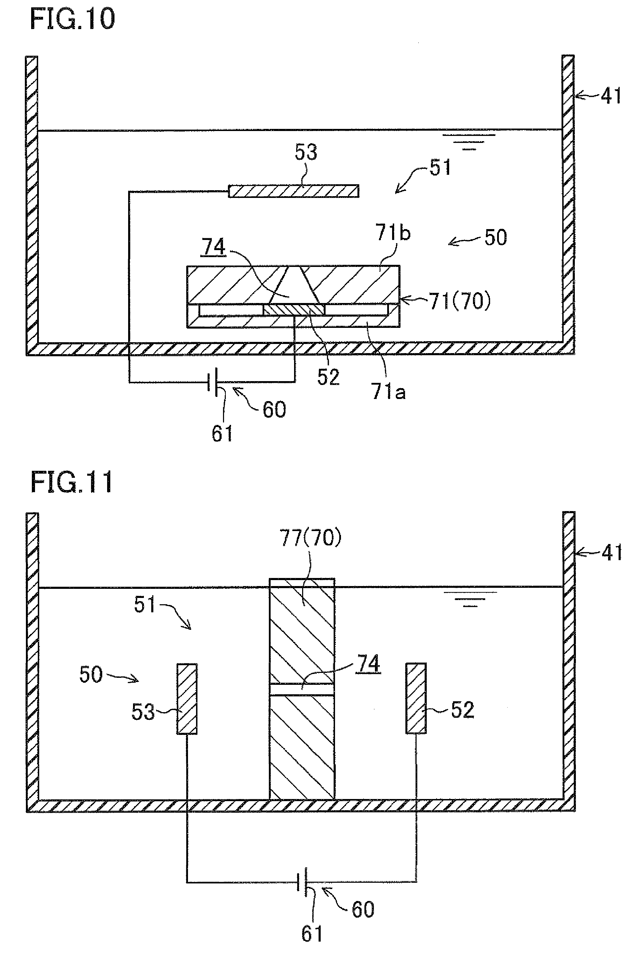

As illustrated in FIGS. 1 and 2, in the humidity control device (10), various components for humidifying or purifying air are accommodated in a casing (11) made of resin. The casing (11) is formed in a rectangular parallelepiped shape in which a dimension in a width direction is larger than a dimension in a longitudinal direction and a height dimension is larger than the dimensions in the width direction and the longitudinal direction. An inlet port (12) through which air is injected into the casing (11) is formed in at least one of front and side surfaces of the casing (11). In addition, a discharge port (13) through which air in the casing (11) is discharged to a room is formed in an upper rear portion of the casing (11). An air path (14) through which air flows is formed so as to extend from the inlet port (12) to the discharge port (13) inside the casing (11). Note that, in the humidity control device (10) illustrated in FIG. 10, the front surface of the casing (11) is covered by a front panel (11a).

As illustrated in FIG. 2, in the air path (14), an air purification unit (20), a humidification unit (40) (humidification mechanism), and a centrifugal fan (15) are arranged in this order from an airflow upstream side to an airflow downstream side.

### <Configuration of Air Purification Unit>

As illustrated in FIG. 2, the air purification unit (20) is for purifying air flowing through the air path (14), and includes a prefilter (21), an ionization section (22), a pleated filter (23), and a deodorization filter (24) in this order from the airflow upstream side to the airflow downstream side.

The prefilter (21) serves as a dust collection filter for physically trapping relatively-large dust contained in air.

The ionization section (22) serves as a dust charging unit for charging dust in air. In the ionization section (22), e.g., a linear electrode and a plate-shaped electrode facing the linear electrode are provided. In the ionization section (22), voltage is applied from a power supply to both of the electrodes, thereby generating corona discharge between both of the electrodes. Dust in air is charged by the corona discharge so as to have a predetermined charge (positive or negative charge).

The pleated filter (23) serves as a corrugated plate-shaped electrostatic filter. That is, dust charged by the ionization section (22) is electrically attracted to the pleated filter (23) and is trapped by the pleated filter (23). Note that a deodorizing material such as a photocatalyst may be supported on the pleated filter (23).

The deodorization filter (24) is configured so that a deodorizer for deodorizing air is supported on a surface of a base material of a honeycomb structure. As the deodorizer, an adsorbent for adsorbing components to be treated (odorous substances and harmful substances) in air, a catalyst for oxidizing and decomposing the components to be treated, etc. may be used,

### <humidification Unit>

As illustrated in FIG. 2, the humidification unit (40) includes a water tank (41) which is a storage section for storing humidification water which is liquid, a water wheel (42) for drawing up water from the water tank (41), a humidification rotor (43) which is a humidification section for imparting water drawn up by the water wheel (42) to air, and a drive motor (44) for rotatably driving the humidification rotor (43). In addition, the humidification unit (40) further includes a heater (48) for heating the humidification rotor (43).

As illustrated in FIG. 1, the water tank (41) includes an elongated box member (45) opening on an upper side thereof and a lid member (46) covering the upper side of the box member (45). The water tank (41) is arranged in a lower space of the casing (11) so that a longitudinal direction of the water tank (41) is along a width direction of the casing (11), and is configured so as to be drawn out (be slidable) through a draw-out port (11b) formed in the side surface of the casing (11). That is, the water tank (41) is detachably accommodated in the casing (11). Thus, in a state in which the water tank (41) is drawn out from the casing (11), the water tank (41) is refilled with humidification water as necessary.

The water wheel (42) is formed in substantially a discoid shape, and a rotary shaft (42a) is provided in the center of the water wheel (42) so as to outwardly protrude from both surfaces of the water wheel (42) in a thickness direction thereof. The rotary shaft (42a) is pivotably supported at an upper end of a bearing portion (not shown in the figure) vertically arranged on a bottom surface of the water tank (41), and therefore the water wheel (42) is rotatably supported in the water tank (41). In addition, the water wheel (42) is supported by the bearing portion in a height position in which a predetermined portion of the water wheel (42), which includes a lower end portion is immersed in water of the water tank (41).

A plurality of recessed portions (42b) are formed in a side surface (a side surface facing the humidification rotor (43)) of the water wheel (42), which is positioned on a side closer to a rear side of the casing. The recessed portions (42b) serve as humidification recessed portions for drawing up humidification water to a side closer to the humidification rotor (43). The recessed portions (42b) are formed at regular intervals in a circumferential direction in an outer end portion of the water wheel (42) in a radial direction. Each of the recessed portions (42b) is alternately displaced between a position where the recessed portion (42b) is immersed in water of the water tank (41) and a position where the recessed portion (42b) is drawn up from water by rotation of the water wheel (42). In such a manner, in the water wheel (42), water entering the recessed portion (42b) in the position where the recessed portion (42b) is immersed in water can be drawn up to above a liquid surface.

A mid gear (42d) is arranged on the rear side surface of the water wheel (42) so as to be concentric with the water wheel (42), and a teeth portion (42c) is integrally formed with an outer circumferential surface of the mid gear (42d). The teeth portion (42c) of the mid gear (42d) is engaged with a driven gear (43a) of the humidification rotor (43), which will be described later.

The humidification rotor (43) includes the circular driven gear (43a) and a discoid adsorption member (43b) held by being fitted into the driven gear (43a). The adsorption member (43b) is configured by non-woven fabric having a water-absorbing property. The humidification rotor (43) is rotatably supported through a rotary shaft in a position higher than a water level when the water tank (41) is filled with water. In addition, the humidification rotor (43) is arranged so that a predetermined portion of the humidification rotor (43), which includes a lower end thereof substantially contacts the water wheel (42). That is, the humidification rotor (43) has a portion overlapping the recessed portions (42b) of the water wheel (42) in an axial direction (longitudinal direction). In such a manner, water drawn up by the recessed portions (42b) of the water wheel is absorbed by the adsorption member (43b) of the humidification rotor (43).

The drive motor (44) rotatably drives the driven gear (43a) of the humidification rotor (43) through, e.g., a pinion. When the drive motor (44) rotates the driven gear (43a), the water wheel (42) engaged with the driven gear (43a) rotates. In such a manner, the drive motor (44) rotates the humidification rotor (43) and the water wheel (42).

The heater (48) is arranged adjacent to an upper end portion of an upstream side surface of the humidification rotor (43). By providing the heater (48), air flowing into the humidification rotor (43) can be heated. Such heat evaporates water of the humidification rotor (43), thereby humidifying air.

### <Configuration of Liquid Treatment Discharge Unit>

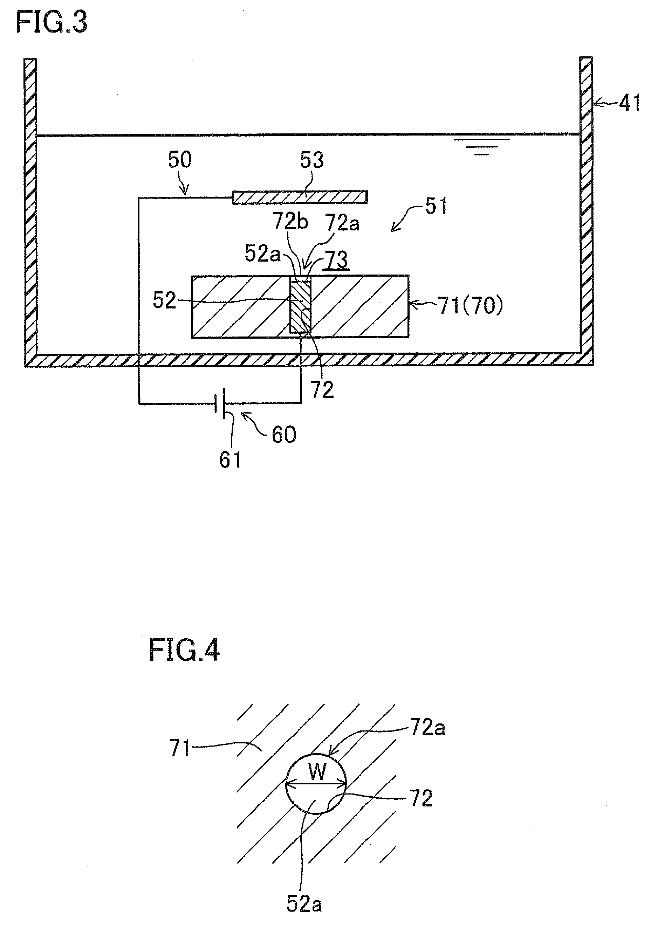

As illustrated in FIGS. 2 and 3, the humidity control device (10) includes a discharge unit (50) as a liquid treatment discharge unit for purifying water stored in the water tank (41). The discharge unit (50) includes a discharge section (51) for generating electric discharge to purify water and a power supply unit (60) forming a power supply circuit of the discharge section (51).

The discharge section (51) is arranged closer to the bottom surface of the water tank (41) in the water tank (41). The discharge section (51) includes a pair of electrodes (52, 53) which are two electrodes (52, 53). The pair of electrodes (52, 53) are a discharge electrode (52) and a counter electrode (53).

The discharge electrode (52) is provided so as to be immersed in water of the water tank (41). The discharge electrode (52) is made of metal, and is formed in a rod-like shape or a linear shape extending toward the counter electrode (53). The discharge electrode (52) is formed so as to have a circular cross section perpendicular to the axis, but the cross section perpendicular to the axis may have other shapes such as a triangular shape, a rectangular shape, and an oval shape.

The counter electrode (53) is provided so as to be immersed in water of the water tank (41). The counter electrode (53) is arranged with a predetermined clearance from the discharge electrode (52) so as to face an end portion (upper end portion) of the discharge electrode (52) in the axial direction. The counter electrode (53) is made of metal, and an outer shape thereof is a flat plate shape. One of flat surfaces of the counter electrode (53) faces a tip end of the discharge electrode (52).

The discharge unit (50) includes a cover member (71) covering part of the discharge electrode (52). The cover member (71) serves as a current density concentration section (70) for increasing a current density of a current path between the pair of electrodes (52, 53). In addition, in the present embodiment, the cover member (71) is configured by an insulating member made of a ceramics material.

The cover member (71) is formed in a bottomed cylindrical shape in which the cover member (71) opens at an upper end and is closed at a lower end. In the center of the cover member (71), an engagement groove (72) extending from an upper end surface of the cover member (71) to a portion slightly above a lower end surface of the cover member (71) in the axial direction is formed. The engagement groove (72) is formed so as to have a true circular cross section perpendicular to the axis. The rod-shaped discharge electrode (52) is fitted into the engagement groove (72). That is, the cover member (71) covers an outer circumferential surface and a lower end surface of the discharge electrode (52), and an upper end surface (tip end surface (52a)) of the discharge electrode (52) is exposed to the counter electrode (53) through the cover member (71).

Note that, in the present embodiment, an inner wall of the engagement groove (72) of the cover member (71) and the discharge electrode (52) substantially contact each other, and therefore a contact area of the discharge electrode (52) and water is reduced. However, a clearance may be formed between the inner wall of the engagement groove (72) of the cover member (71) and the discharge electrode (52).

In the present embodiment, the tip end surface (52a) of the discharge electrode (52) fitted into the engagement groove (72) is inwardly (downwardly) recessed relative to an opening plane (72b) of an opening (72a) on one end side (upper end side) of the engagement groove (72). This forms an aperture space (73) between the opening plane (72b) and the tip end surface (52a) of the discharge electrode (52) in the engagement groove (72). The aperture space (73) is a space for concentrating the current density by narrowing the current path between the discharge electrode (52) and the counter electrode (53) (reducing a cross-sectional area of the current path).

In the present embodiment, an opening width W (see FIG. 4) of the opening (72a) of the engagement groove (72) of the cover member (71) is set to equal to or greater than 0.02 mm and equal to or less than 0.5 mm. Note that the opening width W is an inner diameter of the opening (72a) and the maximum opening length of the opening (72a). In addition, the opening width W is particularly preferably equal to or less than 0.3 mm.

The power supply unit (60) of the present embodiment includes a high-voltage DC power supply (61). The discharge electrode (52) is connected to a positive pole of the DC power supply (61). On the other hand, the counter electrode (53) is connected to a negative pole of the DC power supply (61). That is, the DC power supply (61) serves as a power supply section for applying DC voltage to the pair of electrodes (52, 53). In the present embodiment, the maximum voltage of the DC power supply (61) is equal to or less than 7.0 kV. Further, discharge current of the pair of electrodes (52, 53) when generating the electric discharge is set to equal to or less than 3.0 mA. In addition, a control section (not shown in the figure) for performing a constant current control in which the discharge current of the pair of electrodes (52, 53) is maintained constant or for performing a constant power control in which discharge power of the pair of electrodes (52, 53) is maintained constant is provided in the power supply unit (60).

### Operation

Next, an operation of the humidity control device (10) will be described. The humidity control device (10) purifies room air while performing the humidification operation for humidifying the room air. In addition, the humidity control device (10) performs a water purification operation for purifying water of the water tank (41) when the humidification operation is performed or is stopped (details will be described later).

### <Humidification Operation>

In the humidification operation, the centrifugal fan (15) is operated while rotatably driving the humidification rotor (43) by the drive motor (44). In addition, voltage is applied to the electrodes of the ionization section (22) while energizing the heater (48).

When the centrifugal fan (15) is operated, room air (a white arrow of FIGS. 1 and 2) is injected to the air path (14) of the casing (11) through the inlet port (12). The air injected to the air path (14) passes through the prefilter (21). After dust is trapped by the prefilter (21), the air passes through the ionization section (22). In the ionization section (22), corona discharge is generated between the pair of electrodes and charges dust in air. The air passing through the ionization section (22) passes through the pleated filter (23). The dust charged in the ionization section (22) is electrically attracted to the pleated filter (23) and is trapped by the ionization section (22). The air passing through the pleated filter (23) flows through the deodorization filter (24). In the deodorization filter (24), components to be treated (odorous substances or harmful substances) contained in air are removed. The air passing through the deodorization filter (24) is heated by the heater (48) and passes through the humidification rotor (43).

In the humidification unit (40), the water wheel (42) rotates to supply water (humidification water) of the water tank (41) to the adsorption member (43b) of the humidification rotor (43) as necessary.

Specifically, the water wheel (42) rotates to immerse the recessed portions (42b) of the water wheel (42) in humidification water of the water tank (41). In such a manner, the humidification water enters the recessed portions (42b) and is held in the recessed portions (42b). When the water wheel (42) further rotates, the recessed portions (42b) holding the humidification water is drawn up from the humidification water and is upwardly displaced. Then, as described above, when the recessed portions (42b) upwardly move in accordance with the rotation of the water wheel (42), the recessed portions (42b) gradually approach the humidification rotor (43), and the humidification water held in the recessed portions (42b) gradually flows out from the recessed portions (42b) by its own weight. In such a manner, the humidification water of the recessed portions (42b) is adsorbed by the adsorption member (43b) of the humidification rotor (43). Such an operation allows the humidification water to be continuously supplied to the humidification rotor (43) in the humidification unit (40).

Note that the recessed portion (42b) is configured so that, when the recessed portion (42b) reaches the uppermost end position by the rotation of the water wheel (42), substantially a total amount of humidification water of the recessed portion (42b) flows out.

When air passes through the humidification rotor (43) to which humidification water is adsorbed as described above, moisture adsorbed to the adsorption member (43b) of the humidification rotor (43) is released to air. In such a manner, the humidification water is imparted to air, thereby humidifying the air.

In the foregoing manner, the purified and humidified air is supplied to a room through the discharge port (13). Note that, in the humidification operation, a voltage supply from the power supply to the ionization section (22) may be stopped to stop the air purification by the ionization section (22) and allow the operation for humidifying the room.

### <Water Purification Operation>

When humidification water is stored in the water tank (41) for a long period of time, development of fungi, bacteria, etc. in the water may contaminate the humidification water of the water tank (41). In addition, if substances (harmful substances or odorous substances) such as ammonia are contained in, e.g., air flowing through the air path (14), such substances are dissolved in the water, and the humidification water of the water tank (41) is contaminated. Thus, when the contaminated humidification water is supplied to the room as described above, bacteria, the harmful substances, etc. are imparted to the room, and there is a possibility that cleanliness of the room is degraded. For the foregoing reason, in the humidity control device (10), the water purification operation for purifying water of the water tank (41) is performed by the discharge unit (50).

In the water purification operation, predetermined DC voltage is applied from the DC power supply (61) of the power supply unit (60) to the pair of electrodes (52, 53) of the discharge section (51). In such a manner, in the discharge section (51), electric discharge is generated from the discharge electrode (52) to the counter electrode (53). Note that, in the discharge section (51) of the present embodiment, so-called "positive discharge" is generated, in which the discharge electrode (52) is at positive and the counter electrode (53) is at negative potential. In the present embodiment, the cover member (71) forms the aperture space (73) on the tip end side of the discharge electrode (52), the cross-sectional area of the current path is reduced. In the aperture space (73), the current density is considerably increased. Thus, spreading of current around the discharge electrode (52) is avoided, and field intensity in a tip end portion of the discharge electrode (52) is increased. As a result, the electric discharge is stably generated from the discharge electrode (52) to the counter electrode (53).

In the foregoing manner, the electric discharge is stably generated between the discharge electrode (52) and the counter electrode (53), thereby generating active species such as OH radicals in liquid. The active species are used for cleaning substances to be treated (harmful substances, bacteria, etc.). That is, in the water tank (41), the harmful substances are oxidized and decomposed by the active species, and sterilization is performed by the active species. As a result, since water of the water tank (41) is purified, clean water can be supplied to the room in the subsequent humidification operation.

### <Verification Results of Opening Width of Cover Member>

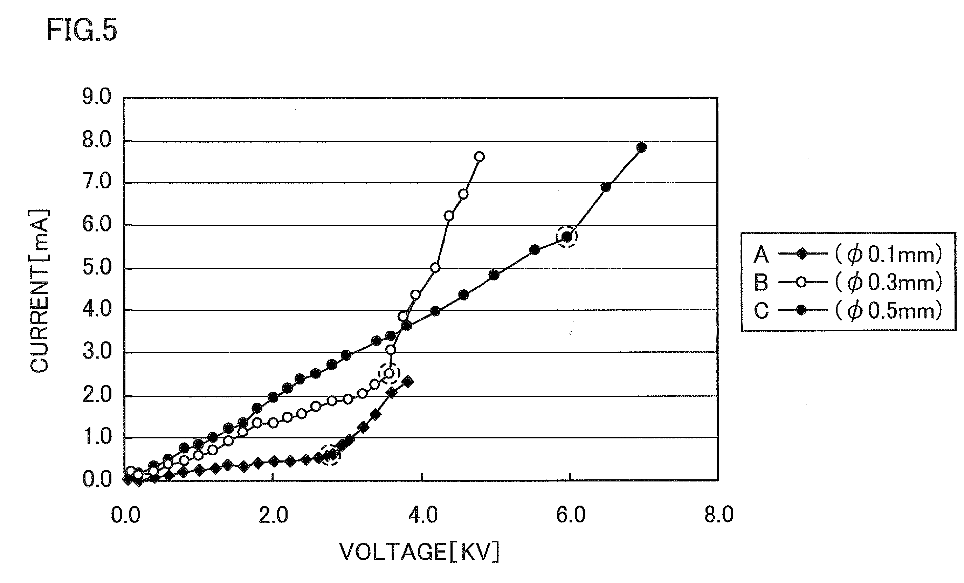

Next, verification results of a relationship between the opening width W of the opening (72a) of the cover member (71) and discharge performance will be described with reference to FIG. 5. Note that FIG. 5 illustrates a current-voltage property of three discharge units (A: W = 0.1 mm, B: W = 0.3 mm, and C: W = 0.5 mm) having different opening widths W of the cover member (71) when voltage is applied from the DC power supply (61) to the pair of electrodes (52, 53).

In each of the discharge units, as the voltage to be applied to the electrodes (52, 53) is gradually increased, current is increased proportional to the voltage to be applied. In each of the discharge units, electric discharge is not generated until the voltage to be applied reaches a voltage point (hereinafter referred to as an "inflection point") surrounded by a dashed circle, and current flows according to Ohm's law by using water as a resistive element. Thus, in each of the discharge units, when the voltage to be applied falls within a range below the inflection point, active species are not generated in liquid, and therefore water is not purified. That is, in each of the discharge units, energy is merely lost when the voltage to be applied falls within the range below the corresponding inflection point.

On the other hand, in each of the discharge units, when the voltage to be applied reaches a point above the inflection point, field intensity between the pair of electrodes (52, 53) is increased, thereby generating electric discharge. When current flows in one stroke in association with the electric discharge, a gradient of the current-voltage property is changed. That is, in each of the discharge units, when the voltage to be applied exceeds the inflection point, the gradient of the current-voltage property is increased. As described above, in each of the discharge units, a change ratio of the gradient of the current-voltage property of the range in which the electric discharge is generated (range on the right side relative to the inflection point as viewed in FIG. 5) to the gradient of the current-voltage property of the range in which the electric discharge is not generated (range on the left side relative to the inflection point as viewed in FIG. 5) is an index representing the intensity of the electric discharge.

When the change ratio of the gradient for each of the discharge units A, B, and C is obtained, the change ratio of the discharge unit A (W = 0.1 mm) is 7.3, the change ratio of the discharge unit B (W = 0.3 mm) is 6.0, and the change ratio of the discharge unit C (W = 0.5 mm) is 2.1. As will be seen from the foregoing, it is preferred that the opening width W of the cover member (71) is equal to or less than 0.5 mm in order to ensure a certain degree of the discharge performance, and the discharge performance is degraded when the opening width W becomes greater than 0.5 mm.

If the opening width W of the cover member (71) is 0.5 mm, it is necessary that the voltage to be applied is at least equal to or greater than 6.0 kV in order to generate the electric discharge. On the other hand, considering an insulation design, the power supply voltage of the DC power supply (61) is preferably equal to or less than 7.0 kV. As will be seen from the foregoing, by setting the opening width W to equal to or less than 0.5 mm, the power supply voltage of the DC power supply (61) can be suppressed to equal to or less than 7.0 kV while obtaining a certain degree of discharge power.

In particular, by setting the opening width W to equal to or less than 0.3 mm, the power of the power supply voltage can be suppressed to equal to or less than about 10 W, and a versatile DC power supply can be used.

### Advantages of First Embodiment

According to the foregoing embodiment, the high-voltage DC power supply (61) is used as the power supply section for applying voltage to the pair of electrodes (52, 53). Thus, simplification and cost reduction of the power supply section can be realized. In addition, in, e.g., a pulsed power supply of the prior art, it is likely to cause shock waves or noise in association with the electric discharge. On the other hand, in the present embodiment, occurrence of such shock waves or noise can be reduced.

In the foregoing embodiment, part of the discharge electrode (52) is covered by the insulating cover member (71), thereby increasing the current density of the current path. Specifically, the aperture space (73) is formed on the tip end side of the discharge electrode (52) in the cover member (71). The aperture space (73) allows the smaller cross-sectional area of the current path, thereby increasing the current density. Thus, the electric discharge can be stably generated from the discharge electrode (52) to the counter electrode (53) through the aperture space (73). As a result, since an amount of active species generated in water in association with the electric discharge can be increased, purification efficiency of water of the water tank (41) can be improved.

In the foregoing embodiment, the opening width W of the opening (72a) of the cover member (71) is equal to or less than 0.5 mm. Thus, the power supply voltage of the DC power supply (61) can be suppressed to a lower voltage level while generating the electric discharge having relatively-large intensity. Consequently, power consumption of the discharge unit (50) is reduced while purifying water of the water tank (41) with higher effciency. In addition, the opening width W is set to equal to or greater than 0.02 mm, thereby facilitating processing when the opening (72a) is formed in the cover member (71).

In the foregoing embodiment, part of the discharge electrode (52) and the cover member (71) contact each other, thereby decreasing the contact area of the discharge electrode (52) and water. Thus, since leakage current flowing from the discharge electrode (52) into water can be reduced, the power supply voltage of the DC power supply (61) can be further reduced.

The cover member (71) of the foregoing embodiment is configured by the insulating material made of the ceramic material. Thus, oxidation/melting of the insulating members (71, 71a, 75, 77) in association with the electric discharge of the discharge unit (50) can be avoided, thereby improving durability of the insulating members (71, 71a, 75, 77).

### Variation of First Embodiment

The discharge unit (50) of the foregoing embodiment may have the following configurations of variations.

### <First Variation>

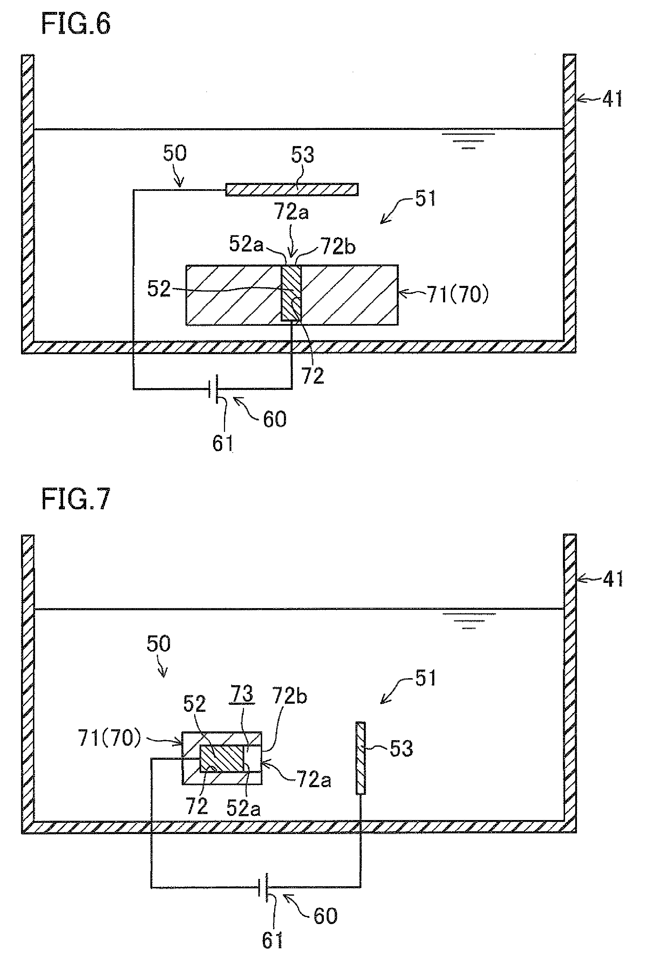

As illustrated in FIG. 6, in the discharge unit (50) of a first variation, the tip end surface (52a) of the discharge electrode (52) and the opening plane (72b) of the engagement groove (72) of the cover member (71) are positioned in the same plane. That is, in the first variation, the depth of the engagement groove (72) and the length of the discharge electrode (52) are substantially equal to each other. In addition, the inner wall of the engagement groove (72) of the cover member (71) and the discharge electrode (52) substantially contact each other.

In the first variation, the current density of the current path can be increased near the tip end surface (52a) of the discharge electrode (52). As a result, the electric discharge can be stably generated from the discharge electrode (52) to the counter electrode (53).

### <Second Variation>

As illustrated in FIG. 7, in the discharge unit (50) of a second variation, the discharge electrode (52) extends in the horizontal direction. On the other hand, the counter electrode (53) is held in an upright position in water so as to face the tip end of the discharge electrode (52). The engagement groove (72) extending in the horizontal direction is formed in the cover member (71), and the opening (72a) on one end side (right side as viewed in FIG. 7) of the engagement groove (72) faces the counter electrode (53). As in the first embodiment, the discharge electrode (52) is arranged in the engagement groove (72) so that the tip end surface (52a) of the discharge electrode (52) is inwardly recessed relative to the opening plane (72b) of the cover member (71). This forms the aperture space (73) between the opening plane (72b) of the engagement groove (72) and the tip end surface (52a) of the discharge electrode (52),

In the second variation, the current density is increased in the aperture space (73). As a result, the electric discharge can be stably generated from the discharge electrode (52) to the counter electrode (53).

### <Third Variation>

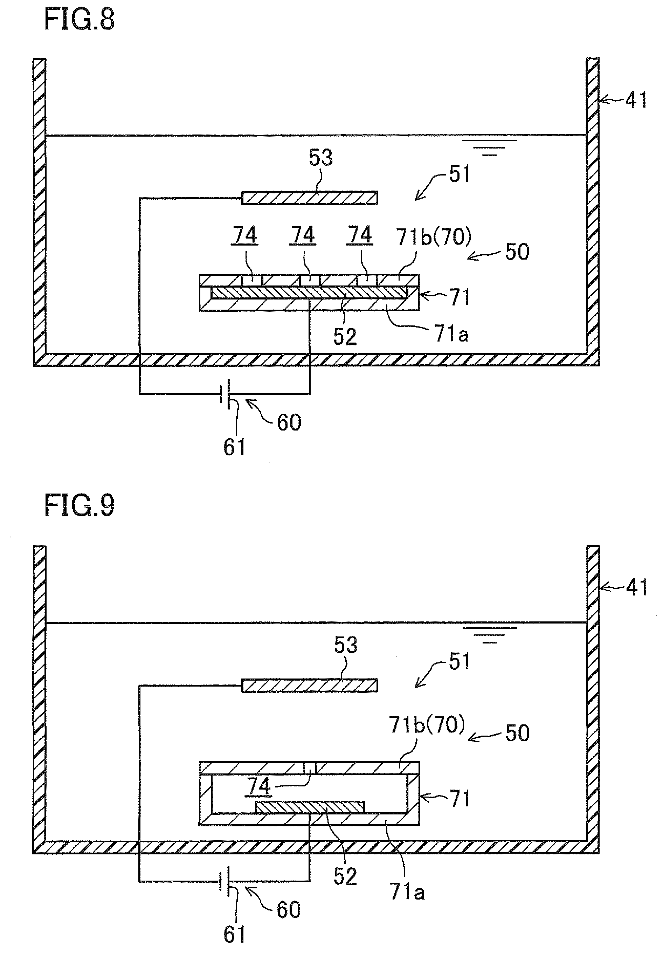

As illustrated in FIG. 8, in the discharge unit (50) of a third variation, the cover member (71) is configured by two members (71a, 71b). Specifically, the cover member (71) includes a box portion (71a) opening at the top and a lid portion (71b) closing the opening at the top of the box portion (71a). Each of the box portion (71a) and the lid portion (71b) is configured by an insulating member such as ceramics.

In the third variation, the discharge electrode (52) is provided inside the box portion (71a). In the cover member (71), the discharge electrode (52) is sandwiched between the box portion (71a) and the lid portion (71b).

A plurality of through-holes (74) are formed in the lid portion (71b) of the cover member (71). Thus, in the discharge unit (50), the discharge electrode (52) is exposed to the counter electrode (53) through each of the through-holes (74).

In the third variation, the current density of the current path is increased inside each of the through-holes (74). Thus, the electric discharge can be stably generated from the discharge electrode (52) to the counter electrode (53) through each of the through-holes (74).

In the third variation, an excessive increase in temperature of the cover member (71) due to an influence of Joule heat generated in the current path can be avoided. That is, although the Joule heat is frequently generated due to an increase in current density in the through-hole (74) of the cover member (71), the Joule heat can be dispersed by forming the plurality of through-holes (74) in the cover member (71) as in the third variation. As a result, the increase in temperature of the cover member (71) in association with the electric discharge can be reduced, thereby improving the durability of the cover member (71). Note that the opening width of the through-hole (74) is preferably equal to or greater than 0.02 mm and equal to or less than 0.5 mm.

### <Fourth Variation>

As illustrated in FIG. 9, in the discharge unit (50) of a fourth variation, the cover member (71) is configured by the two members (71a, 71b) as in the third variation. Specifically, the cover member (71) includes the box portion (71a) opening at the top and the lid portion (71b) closing the opening at the top of the box portion (71a). Each of the box portion (71a) and the lid portion (71b) is configured by the insulating member such as ceramics.

In the fourth variation, the plate-shaped discharge electrode (52) is provided on a bottom portion of the box portion (71a). A single through-hole (74) is formed in the lid portion (71b) so that the electric discharge can be generated from the discharge electrode (52) to the counter electrode (53). That is, the lid portion (71b) of the cover member (71) is arranged so as to separate the pair of electrodes (52, 53), and serves as an insulating blocking member in which the through-hole (74) forming the current path of the pair of electrodes (52, 53) is formed. In addition, the lid portion (71b) of the cover member (71) serves as the current density concentration section (70) for increasing the current density of the current path between the pair of electrodes (52, 53).

In the fourth variation, the cross-sectional area of the current path is reduced in the through-hole (74) of the lid portion (71b), thereby increasing the current density. Thus, the electric discharge can be stably generated from the discharge electrode (52) to the counter electrode (53) through the through-hole (74). Note that the opening width of the through-hole (74) is preferably equal to or greater than 0.02 mm and equal to or less than 0.5 mm.

### <Fifth Variation>

As illustrated in FIG. 10, in the discharge unit (50) of a fifth variation, the cover member (71) includes the box portion (71a) and the lid portion (71b) as in the fourth variation. The box portion (71a) of the fifth variation is formed so as to be more flat as compared to the fourth variation, and the lid portion (71b) of the fifth variation is vertically thickened as compared to the fourth variation. The discharge electrode (52) is accommodated in the box portion (71a) so as to contact a bottom surface of the box portion (71a) and a lower surface of the lid portion (71b).

The through-hole (74) having a tapered shape is formed in the lid portion (71b) of the fifth variation. That is, the through-hole (74) of the fifth variation is formed in a trapezoidal conical shape in which the cross-sectional area perpendicular to the axis is gradually decreased from a lower side closer to the discharge electrode (52) toward an upper side closer to the counter electrode (53). Thus, in the through-hole (74), the cross-sectional area of the current path is gradually reduced toward the upper side.

In the fifth variation, the current density is increased particularly in a portion near an upper end portion of the through-hole (74). Thus, the electric discharge can be stably generated from the discharge electrode (52) to the counter electrode (53) through the through-hole (74). Note that the opening width of the through-hole (74) is preferably equal to or greater than 0.02 mm and equal to or less than 0.5 mm.

### <Sixth Variation>

As illustrated in FIG. 11, in the discharge unit (50) of a sixth variation, the plate-shaped discharge electrode (52) and the plate-shaped counter electrode (53) are arranged so as to face each other in the horizontal direction. A blocking plate (77) is provided between the pair of electrodes (52, 53) as the blocking member. The blocking plate (77) is configured by the insulating member such as ceramics. The through-hole (74) extending in the horizontal direction is formed in a portion of the blocking plate (77) interposed between the discharge electrode (52) and the counter electrode (53). The through-hole (74) forms part of the current path between the pair of electrodes (52, 53).

In the sixth variation, the current density can be increased inside the through-hole (74). Thus, the electric discharge can be stably generated from the discharge electrode (52) to the counter electrode (53) through the through-hole (74). Note that the opening width of the opening (upper end of the through-hole (74)) of the through-hole (74), which has the minimum diameter is preferably equal to or greater than 0.02 mm and equal to or less than 0.5 mm.

### <Seventh Variation>

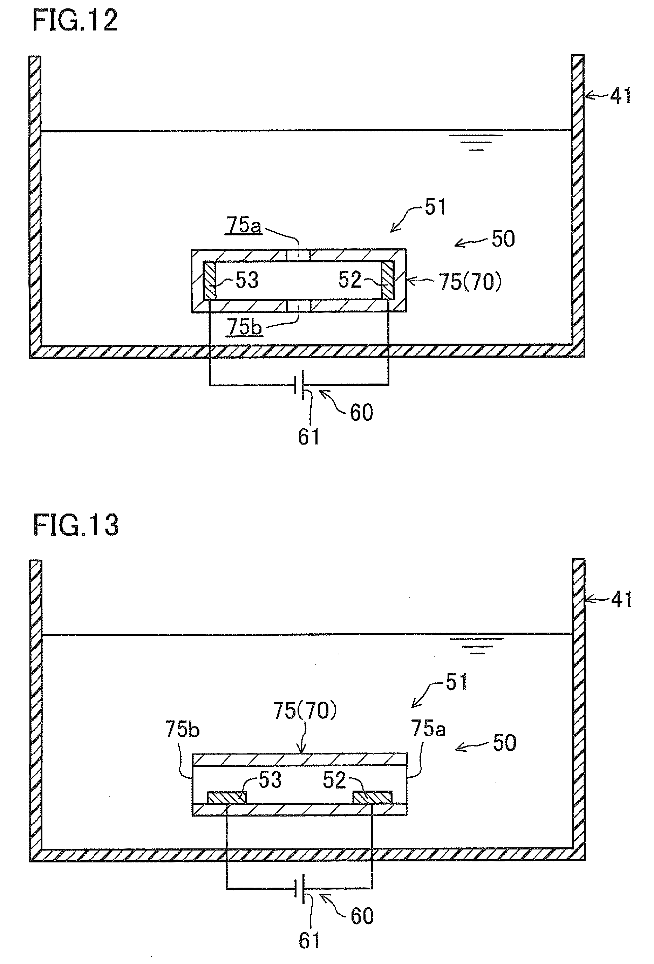

As illustrated in FIG. 12, the discharge unit (50) of a seventh variation includes a case (75) in which both of the discharge electrode (52) and the counter electrode (53) are accommodated. The case (75) is formed in a hollow box shape with flat upper and lower portions. The case (75) is configured by the insulating material such as ceramics. In the case (75), the discharge electrode (52) and the counter electrode (53) are arranged so as to be apart from each other in the horizontal direction and face each other.

A water inlet port (75a) is formed in an upper wall portion of the case (75), and a water outlet port (75b) is formed in a lower wall portion of the case (75). In the seventh variation, water outside the case (75) flows into the case (75) through the water inlet port (75a) by a water delivery mechanism which is not shown in the figure. Water inside the case (75) flows out from the case (75) through the water outlet port (75b). As described above, the water inlet port (75a) and the water outlet port (75b) serve as circulation ports through which the liquid can circulate.

In the seventh variation, since the discharge electrode (52) and the counter electrode (53) are surrounded by the insulating case (75), the spreading of current around the pair of electrodes (52, 53) can be effectively prevented. As a result, an increase in current density of the current path between the discharge electrode (52) and the counter electrode (53) can be ensured, thereby stably generating the electric discharge.

In the seventh variation, water flowing into the case (75) through the water inlet port (75a) circulates through the current path between the pair of electrodes (52, 53). In such a state, a large amount of active species is generated in the current path in association with the electric discharge. Thus, substances to be treated, which are contained in water are efficiently purified by the active species. The water purified in the foregoing manner is sent to outside the case (75) through the water outlet port (75b).

### <Eighth Variation>

As illustrated in FIG. 13, in the discharge unit (50) of an eighth variation, the pair of electrodes (52, 53) are accommodated in the insulating case (75) as in the seventh variation. In the eighth variation, the water inlet port (75a) is fonned on one end side of the case (75) in the horizontal direction, and the water outlet port (75b) is formed on the other end side of the case (75). In addition, in the eighth variation, water of the case (75) flows into the case (75) through the water inlet port (75a) by the water delivery mechanism which is not shown in the figure. Water inside the case (75) flows out from the case (75) through the water outlet port (75b).

Further, in the eighth variation, the discharge electrode (52) and the counter electrode (53) are provided with a predetermined clearance in a bottom portion of the case (75).

In the eighth variation, since the discharge electrode (52) and the counter electrode (53) are surrounded by the insulating case (75), the spreading of current around the pair of electrodes (52, 53) can be effectively prevented. As a result, the increase in current density of the current path between the discharge electrode (52) and the counter electrode (53) can be ensured, thereby stably generating the electric discharge.

### <Ninth Variation>

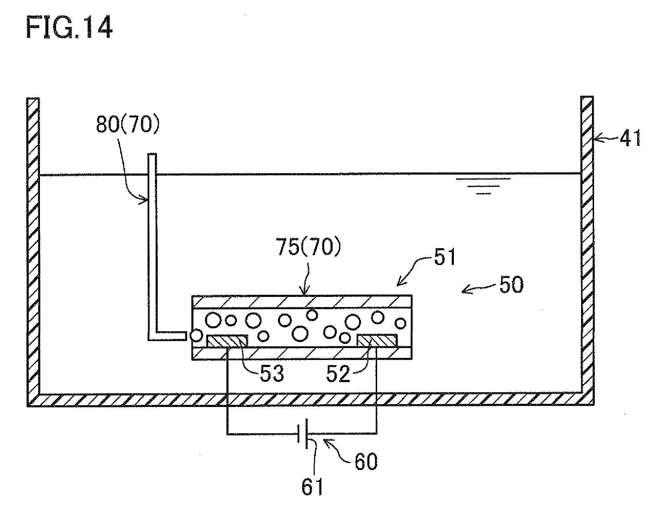

As illustrated in FIG. 14, the discharge unit (50) of a ninth variation is configured by adding an air bubble generation section (80) to the discharge unit (50) of the eighth variation. The air bubble generation section (80) is configured by, e.g., a tube type air pump. Air bubbles generated in the air bubble generation section (80) are supplied to the case (75). In such a manner, the current path inside the case (75) is filled with a plurality of air bubbles. As a result, since a water cross-sectional area is substantially reduced in the case (75), the current density of the current path is increased. That is, in the ninth variation, the air bubble generation section (80) serves as the current density concentration section (70) for increasing the current density of the current path of the pair of electrodes (52, 53).

In the ninth variation, since the pair of electrodes (52, 53) are surrounded by the insulating case (75), the spreading of current can be reduced, thereby increasing the current density of the current path. In addition, the air bubbles are supplied from the air bubble generation section (80) to the current path, thereby substantially decreasing the water cross-sectional area. Thus, the current density can be further increased, thereby more stably generating the electric discharge.

Needless to say, the discharge unit (50) of a combination of the first embodiment and each of the variations may be employed.

### <<Second Embodiment of the Invention>>

A humidity control device (10) of a second embodiment has a configuration of a discharge unit (50) different from that of the first embodiment.

### <Configuration of Liquid Treatment Discharge Unit>

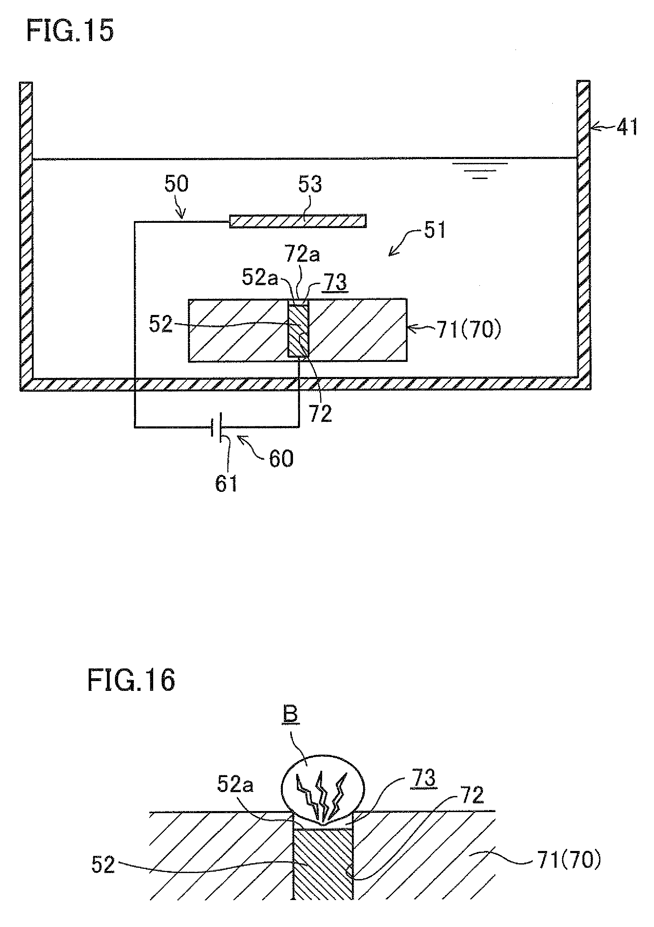

As illustrated in FIGS. 15 and 16, the humidity control device (10) includes the discharge unit (50) as a liquid treatment discharge unit for purifying water stored in a water tank (41). The discharge unit (50) includes a discharge section (51) for generating electric discharge to purify water and a power supply unit (60) forming a power supply circuit of the discharge section (51).

In the water tank (41), the discharge section (51) is arranged closer to a bottom surface of the water tank (41). The discharge section (51) includes a pair of electrodes (52, 53) which are two electrodes (52, 53). The pair of electrodes (52, 53) are a discharge electrode (52) and a counter electrode (53).

The discharge electrode (52) is provided so as to be immersed in water of the water tank (41). The discharge electrode (52) is made of metal, and is formed in a rod-like shape or a linear shape extending toward the counter electrode (53). The discharge electrode (52) is formed so as to have a circular cross section perpendicular to the axis, but the cross section perpendicular to the axis may have other shapes such as a triangular shape, a rectangular shape, and an oval shape.

The counter electrode (53) is provided so as to be immersed in water of the water tank (41). The counter electrode (53) is arranged with a predetermined clearance from the discharge electrode (52) so as to face an end portion (upper end portion) of the discharge electrode (52) in the axial direction. The counter electrode (53) is made of metal, and an outer shape thereof is a flat plate shape. One of flat surfaces of the counter electrode (53) faces a tip end of the discharge electrode (52).

The discharge unit (50) includes a cover member (71) covering part of the discharge electrode (52). The cover member (71) serves as a current density concentration section (70) for increasing a current density of a current path between the pair of electrodes (52, 53). In addition, in the present embodiment, the cover member (71) is configured by an insulating ceramics material.

The cover member (71) is formed in a bottomed cylindrical shape in which the cover member (71) opens at an upper end and is closed at a lower end. In the center of the cover member (71), an engagement groove (72) extending from an upper end surface of the cover member (71) to a portion slightly above a lower end surface of the cover member (71) in the axial direction is formed. The engagement groove (72) is formed so as to have a true circular cross section perpendicular to the axis. The rod-shaped discharge electrode (52) is fitted into the engagement groove (72). That is, the cover member (71) covers an outer circumferential surface and a lower end surface of the discharge electrode (52), and an upper end surface (tip end surface (52a)) of the discharge electrode (52) is exposed to the counter electrode (53) through the cover member (71).

Note that, in the present embodiment, an inner wall of the engagement groove (72) of the cover member (71) and the discharge electrode (52) substantially contact each other, and therefore a contact area of the discharge electrode (52) and water is reduced. However, a clearance may be formed between the inner wall of the engagement groove (72) of the cover member (71) and the discharge electrode (52).

In the present embodiment, the tip end surface (52a) of the discharge electrode (52) fitted into the engagement groove (72) is inwardly (downwardly) recessed relative to an opening plane (72a) of an opening on one end side (upper end side) of the engagement groove (72). This forms an aperture space (73) between the opening plane (72a) and the tip end surface (52a) of the discharge electrode (52) in the engagement groove (72). The aperture space (73) is a space for concentrating current by narrowing the current path between the discharge electrode (52) and the counter electrode (53) (reducing a cross-sectional area of the current path). This generates air bubbles in the aperture space (73) which is regarded as a starting point when the electric discharge is generated in the discharge unit (50) (see FIG. 16, and details will be described later). That is, the aperture space (73) of the present embodiment serves as part of an air bubble generation region (B) where the air bubbles are generated.

The power supply unit (60) of the present embodiment includes a high-voltage DC power supply (61). The discharge electrode (52) is connected to a positive pole of the DC power supply (61). On the other hand, the counter electrode (53) is connected to a negative pole of the DC power supply (61). That is, the DC power supply (61) serves as a power supply section for applying DC voltage to the pair of electrodes (52, 53). Note that voltage to be applied to the pair of electrodes (52, 53) is set to, e.g., about 10 kV. In addition, discharge current of the pair of electrodes (52, 53) is set to, e.g., about 10 mA. Further, a control section (not shown in the figure) for performing a constant current control in which the discharge current of the pair of electrodes (52, 53) is maintained constant or for performing a constant power control in which discharge power of the pair of electrodes (52, 53) is maintained constant is provided in the power supply unit (60).

### <Water Purification Operation>

In a water purification operation, predetermined DC voltage is applied from the DC power supply (61) of the power supply unit (60) to the pair of electrodes (52, 53) of the discharge section (51). This generates electric discharge from the discharge electrode (52) to the counter electrode (53) in the discharge section (51). Note that, in the discharge section (51) of the present embodiment, so-called "positive electric discharge" is generated, in which the discharge electrode (52) is at positive potential and the counter electrode (53) is at negative potential. When the electric discharge is generated as described above, active species such as OH radicals are generated in water in association with the electric discharge.

In addition, when the electric discharge is generated between the discharge electrode (52) and the counter electrode (53), a water temperature is excessively increased due to Joule heat generated in association with the electric discharge. In particular, in the present embodiment, the aperture space (73) is formed by the cover member (71) on a tip end side of the discharge electrode (52), and the cross-sectional area of the current path is reduced. Thus, in the aperture space (73), the current density is considerably increased. This results in a larger degree of Joule heat generated in the aperture space (73), thereby accelerating vaporization of water of the aperture space (73). As a result, occurrence of air bubbles near the aperture space (73) is accelerated, thereby ensuring occurrence of air bubbles in the air bubble generation region (B) (see FIG. 16). Note that, in the air bubble generation region (B), the occurrence of air bubbles in association with the vaporization of water and liquidization of air bubbles by cooling the air bubbles with water therearound progress at the same speed. Thus, the air bubbles of the air bubble generation region (B) constantly have the same shape.

Further, in the present embodiment, DC voltage is applied to the pair of electrodes (52, 53) by the high-voltage DC power supply (61). Thus, as compared to, e.g., a case where a high-voltage pulse is applied to a pair of electrodes, few shock waves in association with the electric discharge are generated in water. Consequently, in the present embodiment, since the air bubbles are not damaged due to such shock waves, the air bubbles can be stably generated in the air bubble generation region (B).

In the foregoing manner, when the air bubbles are generated in the air bubble generation region (B), the electric discharge is generated in association with insulation breakdown of gas in the air bubbles. Thus, in the discharge section (51) of the present embodiment, active species such as OH radicals are generated not only in the liquid but also in the air bubbles. In the foregoing manner, the active species generated in the water tank (41) are used for purifying substances to be treated (harmful substances, bacteria, etc.). That is, in the water tank (41), the harmful substances are oxidized and decomposed by the active species, and sterilization is performed by the active species. As a result, water of the water tank (41) is purified, and therefore clean water can be supplied to a room in a subsequent humidification operation.

### Advantages of Second Embodiment

According to the foregoing embodiment, the Joule heat generated in association with the electric discharge is used to generate the air bubbles, and the electric discharge is also generated in the air bubbles. In the power supply unit (60) of the present embodiment, the high-voltage DC power supply (61) is used as the power supply section for applying voltage to the pair of electrodes (52, 53). Thus, in, e.g., a case where a high-voltage pulse is applied from a pulsed power supply to generate the electric discharge, relatively-large shock waves are generated in water, On the other hand, in the present embodiment, very few of such shock waves are generated in water. Consequently, the air bubbles can be stably generated in the air bubble generation region (B). As a result, generation of electric discharge in air bubbles can be ensured.

The high-voltage DC power supply (61) is used, thereby reducing noise due to the electric discharge. In addition, as compared to the pulsed power supply, simplification and cost reduction of the power supply section can be realized.

In the foregoing embodiment, part of the discharge electrode (52) is covered by the insulating cover member (71), thereby increasing the current density of the current path. In particular, since the aperture space (73) is formed on the tip end side of the discharge electrode (52) in the cover member (71), the cross-sectional area of the current path can be considerably reduced by the aperture space (73). As a result, the degree of Joule heat in the aperture space (73) is increased, thereby accelerating the occurrence of air bubbles.

In the foregoing embodiment, part of the discharge electrode (52) and the cover member (71) contact each other, thereby reducing the contact area of the discharge electrode (52) and water. Thus, since leakage current flowing into water from the discharge electrode (52) can be reduced, power supply voltage of the DC power supply (61) can be reduced. Consequently, miniaturization and cost reduction of the DC power supply (61) can be realized. In addition, power consumption required for the water purification operation can be reduced.

### Variations of Second Embodiment

The discharge unit (50) of the second embodiment may have the following configurations of variations.

### <First Variation>

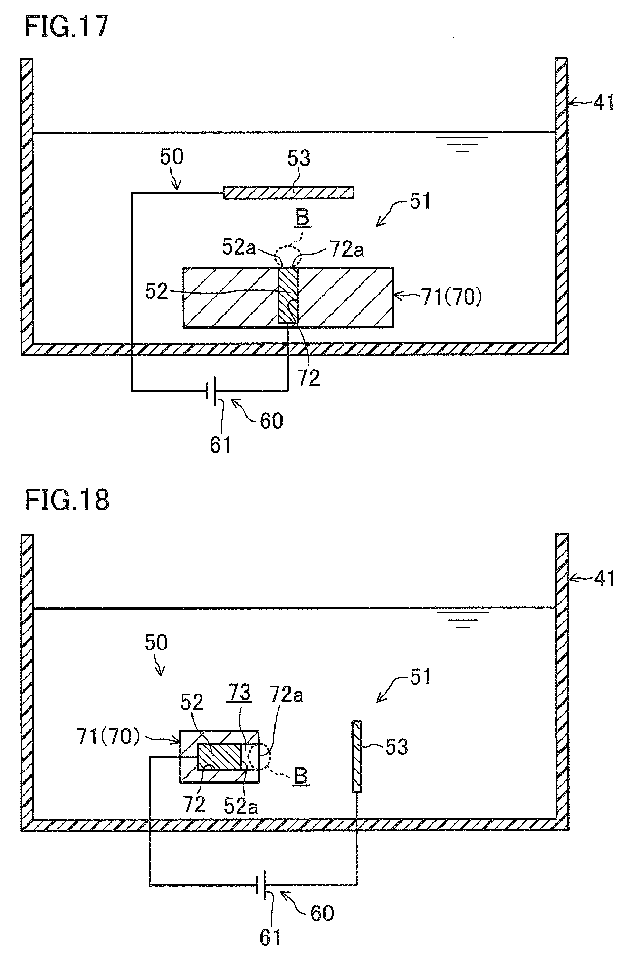

As illustrated in FIG. 17, in the discharge unit (50) of a first variation, the tip end surface (52a) of the discharge electrode (52) and the opening plane (72a) of the engagement groove (72) of the cover member (71) are positioned in the same plane. That is, in the first variation, the depth of the engagement groove (72) and the length of the discharge electrode (52) are substantially equal to each other. In addition, the inner wall of the engagement groove (72) of the cover member (71) and the discharge electrode (52) substantially contact each other.

In the first variation, the current density is increased near the tip end surface (52a) of the discharge electrode (52). Thus, the degree of Joule heat is increased to vaporize water near the tip end surface (52a) of the discharge electrode (52), thereby forming the air bubble generation region (B). Consequently, the electric discharge can be generated in the air bubbles of the air bubble generation region (B). In such a state, in the discharge unit (50), since DC voltage is applied to the pair of electrodes (52, 53), the air bubbles can be stably generated.

### <Second Variation>

As illustrated in FIG. 18, in the discharge unit (50) of a second variation, the discharge electrode (52) extends in the horizontal direction. On the other hand, the counter electrode (53) is held in an upright position in water so as to face the tip end of the discharge electrode (52). The engagement groove (72) extending in the horizontal direction is formed in the cover member (71), and an opening on one end side (right side as viewed in FIG. 18) of the engagement groove (72) faces the counter electrode (53). As in the second embodiment, the discharge electrode (52) is arranged in the engagement groove (72) so that the tip end surface (52a) of the discharge electrode (52) is inwardly recessed relative to the opening plane (72a) of the cover member (71). This forms the aperture space (73) between the opening plane (72a) of the engagement groove (72) and the tip end surface (52a) of the discharge electrode (52).

In the second variation, the current density is increased in the aperture space (73). Thus, the degree of Joule heat is increased to vaporize water near the tip end surface (52a) of the discharge electrode (52), thereby forming the air bubble generation region (B). Thus, the electric discharge can be generated in the air bubbles of the air bubble generation region (B). In such a state, in the discharge unit (50), DC voltage is applied to the pair of electrodes (52, 53), thereby stably generating the air bubbles.

### <Third Variation>

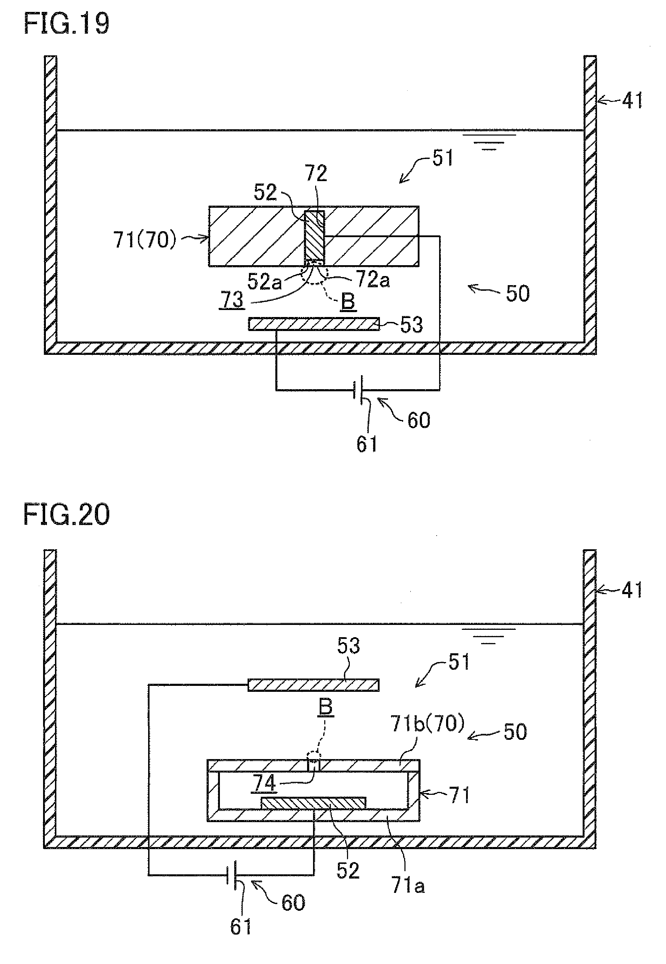

As illustrated in FIG. 19, in the discharge unit (50) of a third variation, a relative position relationship of the discharge electrode (52) and the cover member (71) with the counter electrode (53) is vertically flipped as compared to the second embodiment.

In the third variation, the air bubble generation region (B) is formed in the aperture space (73) below the tip end surface (52a) of the discharge electrode (52). In the third variation, since the engagement groove (72) and the discharge electrode (52) are formed above the air bubble generation region (B), holding of generated air bubbles in the engagement groove (72) can be ensured. Thus, the air bubbles generated in water can be further stabilized.

### <Fourth Variation>

As illustrated in FIG. 20, in the discharge unit (50) of a fourth variation, the cover member (71) is configured by two members (71a, 71b). Specifically, the cover member (71) includes the box portion (71a) opening at the top and the lid portion (71b) closing the opening at the top of the box portion (71a). Each of the box portion (71a) and the lid portion (71b) is configured by an insulating material such as ceramics.

In the fourth variation, the plate-shaped discharge electrode (52) is provided on a bottom portion of the box portion (71a). A through-hole (74) is formed in the lid portion (71b) so that the electric discharge can be generated from the discharge electrode (52) to the counter electrode (53). That is, the lid portion (71b) of the cover member (71) is arranged so as to separate the pair of electrodes (52, 53), and serves as an insulating blocking member in which the through-hole (74) forming the current path of the pair of electrodes (52, 53) is formed. In addition, the lid portion (71b) of the cover member (71) serves as the current density concentration section (70) for increasing the current density of the current path between the pair of electrodes (52, 53).

In the fourth variation, the cross-sectional area of the current path is reduced in the through-hole (74) of the lid portion (71b), thereby increasing the current density. Thus, the degree of Joule heat is increased, thereby forming the air bubble generation region (B) near the through-hole (74). As a result, in the fourth variation, the occurrence of air bubbles can be accelerated, thereby stably generating the electric discharge in the air bubbles.

### <Fifth Variation>

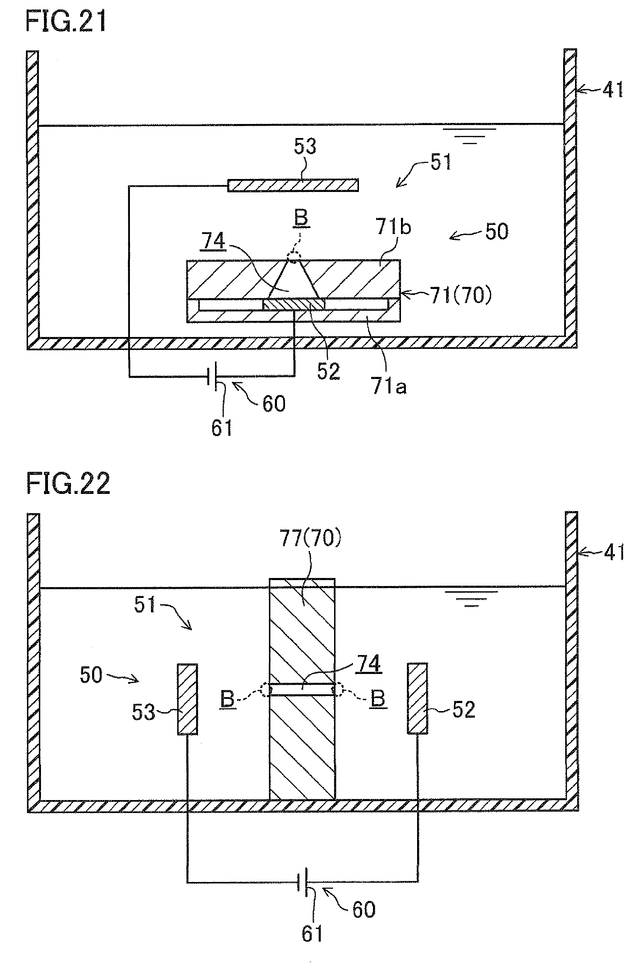

As illustrated in FIG. 21, in the discharge unit (50) of a fifth variation, the cover member (71) includes the box portion (71a) and the lid portion (71b) as in the fourth variation of the second embodiment. The box portion (71a) of the fifth variation is formed so as to be more flat as compared to the fourth variation, and the lid portion (71b) of the fifth variation is vertically thickened as compared to the fourth variation. The discharge electrode (52) is accommodated in the box portion (71a) so that a bottom surface of the box portion (71 a) and a lower surface of the lid portion (71b) contact each other.

The through-hole (74) having a tapered shape is formed in the lid portion (71b) of the fifth variation. That is, the through-hole (74) of the fifth variation is formed in a trapezoidal conical shape in which a cross-sectional area perpendicular to the axis is gradually decreased from a lower side closer to the discharge electrode (52) toward an upper side closer to the counter electrode (53). Thus, in the through-hole (74), the cross-sectional area of the current path is gradually reduced toward the upper side.

In the fifth variation, since the current density is increased particularly in a portion near an upper end portion of the through-hole (74), the air bubble generation region (B) is formed near such a portion. As a result, in the fifth variation, the occurrence of air bubbles can be accelerated, thereby stably generating the electric discharge in the air bubbles.

### <Sixth Variation>

As illustrated in FIG. 22, in the discharge unit (50) of a sixth variation, the plate-shaped discharge electrode (52) and the plate-shaped counter electrode (53) are arranged so as to face each other in the horizontal direction. A blocking plate (77) is provided between the pair of electrodes (52, 53) as the blocking member. The blocking plate (77) is configured by the insulating member such as ceramics. The through-hole (74) extending in the horizontal direction is formed in a portion of the blocking plate (77) interposed between the discharge electrode (52) and the counter electrode (53). The through-hole (74) forms part of the current path between the pair of electrodes (52, 53). The blocking plate (77) serves as the current density concentration section (70) for increasing the current density of the current path between the pair of electrodes (52, 53).

In the sixth variation, since the current density is increased inside the through-hole (74), the air bubble generation region (B) is formed near the inside of the through-hole (74). Note that, in the example illustrated in FIG. 22, the air bubble generation regions (B) are formed near both end openings of the through-hole (74) in an axial direction. As a result, in the sixth variation, the occurrence of air bubbles can be accelerated, thereby stably generating the electric discharge in the air bubbles.

### <Seventh Variation>

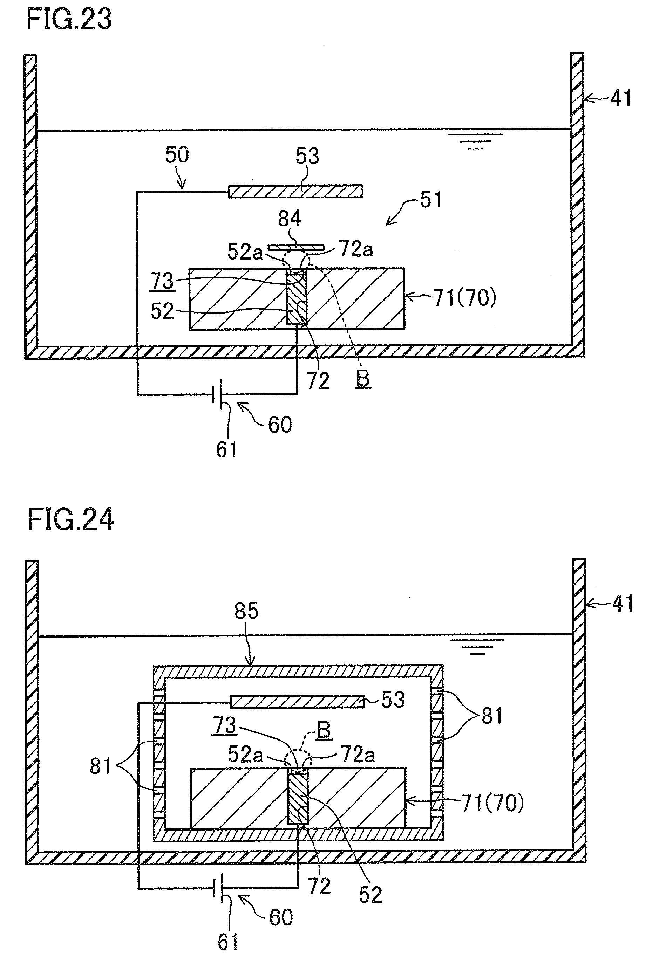

As illustrated in FIG. 23, in the discharge unit (50) of a seventh variation, an air bubble holding plate (84) which is an air bubble holding section is further added to the configuration of the first embodiment. The air bubble holding plate (84) is provided above the engagement groove (72) of the cover member (71) of the first embodiment (i.e., above the air bubble generation region (B)). The air bubble holding plate (84) is made of an insulating material such as ceramics and insulating resin. The air bubble holding plate (84) is preferably in a plate shape covering the air bubbles from above, and may be in, e.g., a circular plate shape, a rectangular shape, a bowl-like shape opening on a lower side, a hemispherical shape opening on a lower side, etc.

In the seventh variation, the air bubbles generated in the air bubble generation region (B) can be held below the air bubble holding plate (84). Thus, since upward escaping of air bubbles generated in the air bubble generation region (B) from liquid can be avoided, the air bubbles in the liquid can be stabilized. As a result, the electric discharge can be stably generated in the air bubbles.

### <Eighth Variation>

As illustrated in FIG. 24, in the discharge unit (50) of an eighth variation, a heat insulating member (85) is further added to the configuration of the first embodiment. The heat insulating member (85) is formed in a hollow rectangular box shape, and the discharge electrode (52), the counter electrode (53), and the cover member (71) are accommodated in the heat insulating member (85).

The heat insulating member (85) is made of a insulating ceramics material, and a plurality of opening holes (81) are formed in side surfaces. The opening holes (81) allow a water inflow from an outside of the heat insulating member (85) to an inside of the heat insulating member (85) and a water outflow from the inside of the heat insulating member (85) to the outside of the heat insulating member (85). The cover member (71) is provided in a bottom portion of the heat insulating member (85). In addition, the counter electrode (53) is arranged closer to an upper portion of the heat insulating member (85) so as to face the discharge electrode (52) fitted into the engagement groove (72) of the cover member (71). In the foregoing manner, the heat insulating member (85) is arranged so as to surround the current path of the pair of electrodes (52, 53).

In an eighth variation, since the current path is surrounded by the heat insulating member (85), a water temperature of the current path is less likely to be dropped due to an influence of external air. That is, in the eighth variation, an increase in water temperature in association with the electric discharge is accelerated, thereby accelerating vaporization of water in the current path. As a result, in the eighth variation, the occurrence of air bubbles can be further ensured, thereby stably generating the electric discharge in the air bubbles.

Needless to say, the discharge unit (50) of a combination of the second embodiment and each of the variations may be employed.

### <<Third Embodiment of the Invention>>

A humidity control device (10) of the third embodiment has a configuration of a discharge unit (50) different from that of the first embodiment.

### <Configurations of Liquid Treatment Discharge Unit>

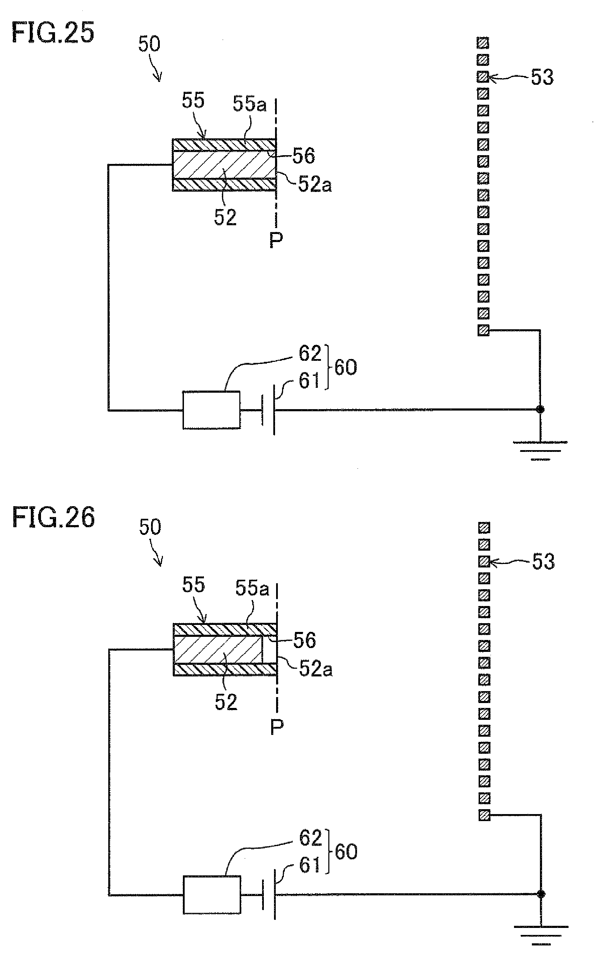

As illustrated in FIG. 25, the humidity control device (10) includes a discharge unit (50) which is a liquid treatment discharge unit for purifying water stored in a water tank (41). The discharge unit (50) further includes a discharge section (51) for generating electric discharge to purify water and a power supply unit (60) forming a power supply circuit of the discharge section (51).

The discharge section (51) is arranged closer to a bottom surface of the water tank (41) in the water tank (41). The discharge section (51) includes a discharge electrode (52) and a counter electrode (53). The discharge electrode (52) is provided so as to be immersed in water of the water tank (41). The discharge electrode (52) is made of metal, and is formed in a rod-like shape or a linear shape extending toward the counter electrode (53). The discharge electrode (52) is formed so as to have a circular cross section perpendicular to the axis, but the cross section perpendicular to the axis may have other shapes such as a triangular shape, a rectangular shape, and an oval shape.

The counter electrode (53) is provided so as to be immersed in water of the water tank (41). The counter electrode (53) is arranged with a predetermined clearance from the discharge electrode (52) so as to face an end portion (upper end portion) of the discharge electrode (52) in the axial direction. The counter electrode (53) is made of metal, and an outer shape thereof is a flat plate shape. In addition, the counter electrode (53) is formed in a net-like pattern or a grid pattern in which a plurality of holes open. One of surfaces of the counter electrode (53) faces a tip end of the discharge electrode (52).

The power supply unit (60) includes a high-voltage DC power supply (61) and a switching mechanism (62). The switching mechanism (62) converts DC voltage into voltage having a predetermined voltage varying in predetermined cycles. Note that, as a method employed in the switching mechanism (62), e.g., the following methods may be employed: a method in which a semiconductor switching element is turned ON/OFF; a so-called "rotary spark gap" method in which two terminals which are apart from each other are periodically in conduction with each other by a rotating conductor; and a discharge gap method in which a clearance between two terminals which are apart from each other is adjusted to periodically generate electric discharge between both of the terminals.

In the present embodiment, the discharge electrode (52) is in conduction with a negative pole side of the high-voltage DC power supply (61), and the counter electrode (53) is in conduction with a positive pole side of the high-voltage DC power supply (61). In addition, the positive pole side of the high-voltage DC power supply (61) is grounded, and the counter electrode (53) is substantially at ground potential. In the foregoing manner, the power supply unit (60) provides a potential difference to both of the electrodes (52, 53) so that the discharge electrode (52) has potential lower than that of the counter electrode (53). This generates so-called "negative electric discharge" from the discharge electrode (52) to the counter electrode (53) in the present embodiment (details will be described later).

The discharge unit (50) includes an insulating member (55) covering the discharge electrode (52). The insulating member (55) of the present embodiment has an outer circumferential covering portion (55a) covering an outer circumferential surface of the rod-shaped discharge electrode (52). That is, the outer circumferential covering portion (55a) is formed in a cylindrical shape, and covers an entire outer circumferential region of the discharge electrode (52). In other words, in the insulating member (55) of the present embodiment, a circular opening (56) is formed so that an end portion of the discharge electrode (52) on a side closer to the counter electrode (53) is exposed. In the discharge electrode (52), the portion of the discharge electrode (52) facing the counter electrode (53) through the circular opening (56) serves as an exposure portion (52a). Note that, in the insulating member (55) of the present embodiment, an opening is also formed in an end portion on a side opposite to the counter electrode (53). However, such an opening may not necessarily formed in the insulating member (55). That is, the insulating member (55) may be in a bottomed cylindrical shape opening only at an end closer to the counter electrode (53).

In the present embodiment, a relative position relationship between the discharge electrode (52) and the insulating member (55) is set so that an end surface of the exposure portion (52a) of the discharge electrode (52) and an end plane of the opening (56) of the insulating member (55) are substantially in the same plane. In other words, in the discharge unit (50), the end surface of the exposure portion (52a) of the discharge electrode (52) and the end surface of the insulating member (55) on the side closer to the counter electrode (53) in an axial direction form a flat circular surface, and the circular surface and the counter electrode (53) are substantially parallel to each other.

As described above, in the present embodiment, part (tip end portion) of a surface of the discharge electrode (52) is exposed to the counter electrode (53), and the outer circumferential surface of the discharge electrode (52) is covered by the insulating member (55). In addition, the discharge electrode (52) and the insulating member (55) substantially contact each other.

### <Water Purification Operation>

In a water purification operation, a predetermined potential difference is provided from the power supply unit (60) to the discharge section (51). Specifically, in the power supply unit (60), DC voltage of the DC power supply (61) is changed into periodically-varying voltage by the switching mechanism (62), and the varying voltage is applied to the discharge electrode (52) and the counter electrode (53). This generates streamer discharge from the discharge electrode (52) to the counter electrode (53) in the discharge section (51). Note that, in the discharge section (51) of the present embodiment, so-called "negative electric discharge" is generated, in which the discharge electrode (52) is at negative potential and the counter electrode (53) is at positive potential.

The outer circumferential surface of the discharge electrode (52) of the discharge unit (50) is covered by the outer circumferential covering portion (55a) of the insulating member (55), and is blocked from water of the water tank (41). On the other hand, a tip end surface of the discharge electrode (52) is not covered by the insulating member (55), and serves as the exposure portion (52a) exposed so as to face the counter electrode (53). Thus, when the streamer discharge is generated in the discharge section (51), the electric discharge is generated from the exposure portion (52a) of the discharge electrode (52) to the counter electrode (53) while forming an electric line of force with relatively-high density. That is, part of the discharge electrode (52) of the present embodiment is covered by the insulating member (55), thereby reducing spreading of discharge current in water. Thus, the electric discharge is generated with relatively-high field intensity between the discharge electrode (52) and the counter electrode (53). As a result, a large amount of high-concentration active species is generated between the discharge electrode (52) and the counter electrode (53). In addition, the discharge electrode (52) and the insulating member (55) contact each other, thereby reducing a contact area of the discharge electrode (52) and water. Thus, leakage current from the discharge electrode (52) to water is also reduced.

The active species generated in water in the foregoing manner contact bacteria, dissolved substances, etc. in water. This allows sterilization by the active species and the oxidation and decomposition of the dissolved substances etc. by the active species in the water purification operation. As a result, since water of the water tank (41) is purified, clean water can be supplied to a room in a subsequent humidification operation.

### Advantages of Third Embodiment

According to the third embodiment, part of the surface of the discharge electrode (52) is exposed to the counter electrode (53), and the discharge electrode (52) is covered by the insulating member (55). Thus, the insulating member (55) can prevent the spreading of the discharge current of the discharge electrode (52). This generates the electric discharge with the higher field intensity between the discharge electrode (52) and the counter electrode (53), thereby generating a large amount of high-concentration active species in water of the water tank (41). As a result, decomposition efficiency of dissolved substances in liquid and sterilization efficiency can be improved, thereby enhancing purification performance of humidification water. Thus, the humidity control device (10) which can supply clean humidification water to the room can be provided.

The reduction in contact area of the discharge electrode (52) and water results in the reduction in leakage current of the discharge electrode (52). Thus, the potential difference required for the streamer discharge can be reduced. Consequently, power supply voltage of the DC power supply (61) of the power supply unit (60) can be reduced, thereby realizing miniaturization and cost reduction of the DC power supply (61). In addition, power consumption required for the water purification operation can be also reduced.

The discharge electrode (52) is formed in a rod-like shape directing the counter electrode (53), and the outer circumferential surface of the discharge electrode (52) is covered by the outer circumferential covering portion (55a). Thus, with a relatively-simple structure, the exposure portion (52a) of the discharge electrode (52) faces the counter electrode (53) while reducing the contact area of the discharge electrode (52) and water. Note that, as a method for easily forming the discharge electrode (52) and the insulating member (55) of the third embodiment, a tip end of an electric wire (lead wire) covered about an axis thereof by an insulating material (e.g., plastic) is cut off, and then only the tip end of the liner discharge electrode (52) can be exposed to water.

In the discharge unit (50) of the present embodiment, the exposure portion (52a) of the discharge electrode (52) and the end plane of the opening (56) of the insulating member (55) are positioned in the same plane (a plane P illustrated in FIG. 25). Thus, an area of the exposure portion (52a) of the discharge electrode (52), which is substantially exposed to the counter electrode (53) is only an area of the discharge electrode (52) corresponding to the opening (56) of the insulating member (55). In such a manner, the exposure area of the exposure portion (52a) of the discharge electrode (52) can be suppressed to the minimum, and the spreading of the discharge current can be effectively prevented.

In the discharge unit (50), the so-called "negative electric discharge" is generated from the discharge electrode (52) to the counter electrode (53). This allows electrons to move toward the counter electrode (53) which is at high potential when the electric discharge is generated. That is, in the negative electric discharge, the electrons do not move to the discharge electrode (52). In such a manner, avoidance of concentration and collision of electrons in the exposure portion (52a) of the discharge electrode (52) can be ensured. As a result, avoidance of wear damage/degradation of the exposure portion (52a) due to the electron collision can be ensured, thereby stably and continuously generating desired electric discharge.

In the present embodiment, although the electrons move toward the counter electrode (53), a facing area (surface area of the counter electrode (53) on a side closer to the discharge electrode (52)) of the counter electrode (53) is extremely larger as compared to the exposure portion (52a) of the discharge electrode (52). Thus, since the electrons are dispersed and collie against the counter electrode (53), it is less likely that wear damage/degradation of the counter electrode (53) are caused.

### Variations of Third Embodiment

The discharge unit (50) of the third embodiment may have the following configurations of variations.

### <First Variation>

In a first variation illustrated in FIG. 26, the end surface of the exposure portion (52a) of the rod-shaped discharge electrode (52) is positioned on an inner side relative to the end plane (i.e., the plane P illustrated in FIG. 26) of the opening (56) of the insulating member (55) in the discharge unit (50) of the foregoing embodiment. That is, the rod-shaped discharge electrode (52) is arranged so that the tip end of the rod-shaped discharge electrode (52) is recessed relative to the end plane of the opening (56) of the insulating member (55). In other words, the exposure portion (52a) of the discharge electrode (52) faces the counter electrode (53) with the exposure portion (52a) being positioned inside the opening (56) of the insulating member (55). In addition, the discharge electrode (52) and the insulating member (55) substantially contact each other. The same configurations as those of the third embodiment are applied to configurations other than the foregoing in the first variation.

In the discharge unit (50) of the first variation, the electric discharge is also generated from the exposure portion (52a) of the discharge electrode (52) to the counter electrode (53) while forming an electric line of force with relatively-high density. When the electric discharge is generated from the surface of the exposure portion (52a), the electric discharge is guided to an outside of the opening (56) along an inner circumferential surface of the circular opening (56). Thus, the high-density electric line of force is formed so as to direct the counter electrode (53) when the electric discharge is generated, thereby increasing the field intensity between the discharge electrode (52) and the counter electrode (53). As a result, a large amount of high-concentration active species can be generated in water of the water tank (41) of the first variation.

### <Second Variation>

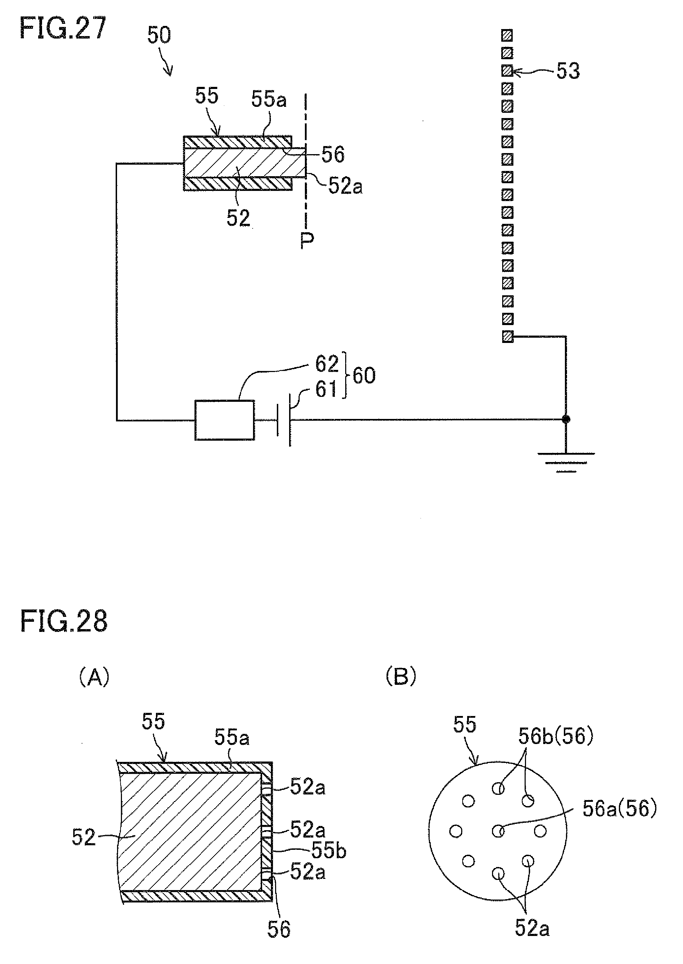

In a second variation illustrated in FIG. 27, the end surface of the exposure portion (52a) of the rod-shaped discharge electrode (52) is positioned on an outer side relative to the end plane (i.e., the plane P illustrated in FIG. 27) of the opening (56) of the insulating member (55) in the discharge unit (50) of the foregoing embodiment. That is, the rod-shaped discharge electrode (52) is arranged so that the tip end of the rod-shaped discharge electrode (52) protrudes beyond the end plane of the opening (56) of the insulating member (55), In other words, the exposure portion (52a) of the discharge electrode (52) faces the counter electrode (53) with the exposure portion (52a) being positioned outside the opening (56) of the insulating member (55). In addition, the discharge electrode (52) and the insulating member (55) substantially contact each other. The same configurations as those of the third embodiment are applied to configurations other than the foregoing in the second variation.

In the discharge unit (50) of the second variation, streamer discharge is also generated from the exposure portion (52a) of the discharge electrode (52) to the counter electrode (53) while forming an electric line of force with relatively-high density. The exposure portion (52a) protrudes beyond the opening (56) as in the foregoing, degradation or melting of the insulating member (55) due to an influence of the electric discharge generated from the exposure portion (52a) can be prevented. Thus, an increase in exposure area of the discharge electrode (52) in association with the degradation etc. of the insulating member (55) can be prevented, and therefore degradation of an effect of preventing leakage current by the insulating member (55) can be avoided.

### <Third Variation>

In a third variation illustrated in FIGS. 28(A) and 28(B), the outer circumferential surface of the rod-shaped discharge electrode (52) is covered by the outer circumferential covering portion (55a), and the tip end surface of the discharge electrode (52) is covered by a tip end covering portion (55b). That is, the insulating member (55) covering the discharge electrode (52) includes the outer circumferential covering portion (55a) and the tip end covering portion (55b). The discharge electrode (52) is arranged so that the tip end surface of the discharge electrode (52) (i.e., the tip end covering portion (55b)) directs the counter electrode (53).

A plurality of openings (56) having a relatively-small diameter are formed in the tip end covering portion (55b). The plurality of openings (56) includes, e.g., a center opening (56a) formed in the center of the tip end covering portion (55b), and a plurality of outer openings (56b) radially arranged around the center opening (56a). In addition, the discharge electrode (52) and the insulating member (55) substantially contact each other.

By forming the plurality of openings (56) in the tip end covering portion (55b) as described above, a plurality of circular exposure portions (52a) corresponding to the openings (56) are formed in the tip end surface of the discharge electrode (52). The plurality of exposure portions (52a) are exposed to water with the exposure portions (52a) facing the counter electrode (53).

In the discharge unit (50) of the third variation, streamer discharge is generated from each of the exposure portions (52a) of the discharge electrode (52) to the counter electrode (53). Thus, a plurality of electric discharges with a relatively-high density electric line of force are simultaneously generated from the discharge electrode (52). As a result, in water of the water tank (41) of the third variation, since a large amount of high-concentration active species can be generated across a relatively-large area, purification efficiency of water of the water tank (41) can be improved.

### <Fourth Variation>

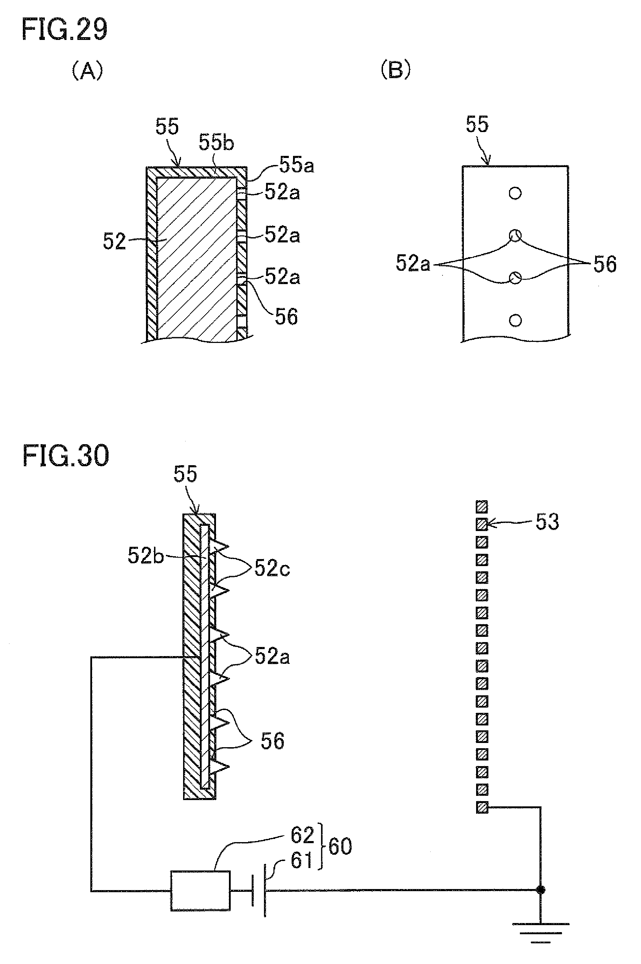

In a fourth variation illustrated in FIGS. 29(A) and 29(B), the outer circumferential surface of the rod-shaped discharge electrode (52) is covered by the outer circumferential covering portion (55a), and the end surface of the discharge electrode (52) is covered by the tip end covering portion (55b). That is, the insulating member (55) covering the discharge electrode (52) includes the outer circumferential covering portion (55a) and the tip end covering portion (55b). The discharge electrode (52) is arranged so that part of the outer circumferential surface of the rod-shaped discharge electrode (52) faces the counter electrode (53). That is, in the fourth variation, the center of the rod-shaped discharge electrode (52) and the planar or flat plate-shaped counter electrode (53) are arranged substantially parallel to each other.

In the insulating member (55) of the fourth variation, a plurality of openings (56) having a relatively-small diameter are formed in a portion of the outer circumferential covering portion (55a) on a side closer to the counter electrode (53). The plurality of openings (56) are arranged at predetermined intervals in the axial direction of the discharge electrode (52). In addition, the discharge electrode (52) and the insulating member (55) substantially contact each other.

By forming the plurality of openings (56) in the outer circumferential covering portion (55a) as described above, a plurality of circular exposure portions (52a) corresponding to the openings (56) are formed in the outer circumferential surface of the discharge electrode (52). The plurality of exposure portions (52a) are exposed to water with the exposure portions (52a) facing the counter electrode (53).

In the discharge unit (50) of the fourth variation, streamer discharge is generated from each of the exposure portions (52a) of the discharge electrode (52) to the counter electrode (53). Thus, a plurality of electric discharges with a relatively-high density electric line of force are simultaneously generated from the discharge electrode (52). As a result, in water of the water tank (41) of the fourth variation, since a large amount of high-concentration active species can be generated across a relatively-large area, the purification efficiency of water of the water tank (41) can be improved.

### <Fifth Variation>

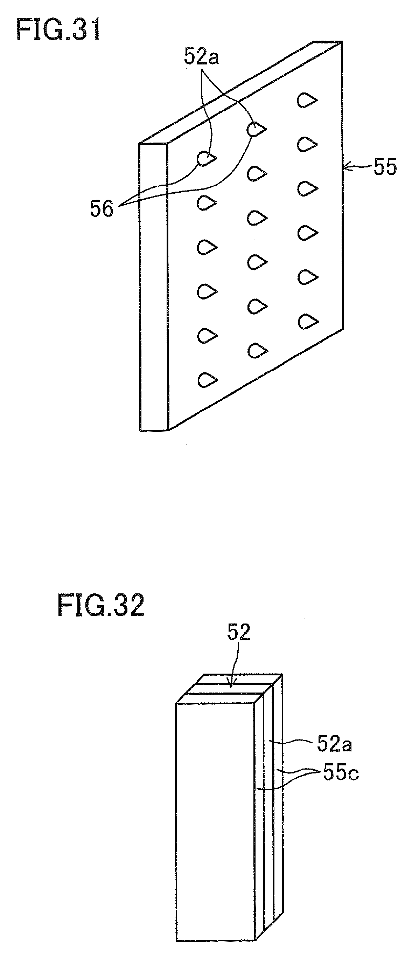

The discharge unit (50) illustrated in FIGS. 30 and 31 has a configuration of the discharge electrode (52) different from that of the foregoing embodiment. The discharge electrode (52) of the fifth variation includes a base (52b) and a plurality of protrusions (52c). The base (52b) is formed in a flat plate shape, and faces the counter electrode (53) so as to be parallel to the counter electrode (53). The plurality of protrusions (52c) are formed in one of end surfaces of the base (52b) in a thickness direction thereof, which is on a side closer to the counter electrode (53). Each of the protrusions (52c) is formed in a circular conical shape, and a top portion of the protrusion (52c) protrudes so as to direct the counter electrode (53). In addition, in the base (52b), the protrusions (52c) are arranged at predetermined intervals in a height direction and a width direction thereof (see FIG. 31).

In the fifth variation, the insulating member (55) is formed so as to cover an entire region of the base (52b) of the discharge electrode (52). In addition, in the insulating member (55), a plurality of openings (56) are formed corresponding to the protrusions (52c). That is, in the insulating member (55), the plurality of openings (56) are formed so that the protrusions (52c) penetrate the insulating member (55). The opening (56) allows a tip end side portion of each of the protrusions (52c) of the discharge electrode (52) to be exposed to water with the tip end side portion directing the counter electrode (53). In addition, the discharge electrode (52) and the insulating member (55) substantially contact each other.

In the discharge unit (50) of the fifth variation, electric discharges with a relatively-high density electric line of force are simultaneously generated from tip ends of the protrusions (52c) of the discharge electrode (52) to the counter electrode (53). In particular, in each of the protrusions (52c), since the electric discharge is concentrated at the tip end of the protrusion (52c), the density of the electric line of force can be further increased. As a result, in water of the water tank (41) of the fourth variation, since a large amount of high-concentration active species can be generated across a relatively-large area, the purification efficiency of water of the water tank (41) can be improved.

### <Sixth Variation>

The discharge unit (50) illustrated in FIG. 32 has a configuration of the discharge electrode (52) different from that of the foregoing embodiment. The discharge electrode (52) of a sixth variation is formed in a thin plate shape. A thin film-shaped insulating member (55c) is formed on each of both end surfaces of the discharge electrode (52) in a thickness direction thereof. That is, in the sixth variation, the discharge electrode (52) is sandwiched between the two thin film-shaped insulating members (55c). The discharge electrode (52) and each of the insulating members (55c) substantially contact each other. Note that, as a method for forming the insulating member (55) on each of the both surfaces of the plate-shaped discharge electrode (52), there is, e.g., a method for spraying or bonding an insulating member such as ceramic to the both surfaces of the discharge electrode (52). In addition, the film thickness of the thin film-shaped insulating member (55c) is preferably equal to or less than several micrometers.

In the discharge electrode (52) of the sixth variation, the exposure portion (52a) is formed between the insulating members (55c), and is exposed to water with the exposure portion (52a) facing the counter electrode (53). A relatively-high density field can be formed between the exposure portion (52a) and the counter electrode (53), and a large amount of high-concentration active species can be generated in water.

### <Seventh Variation>

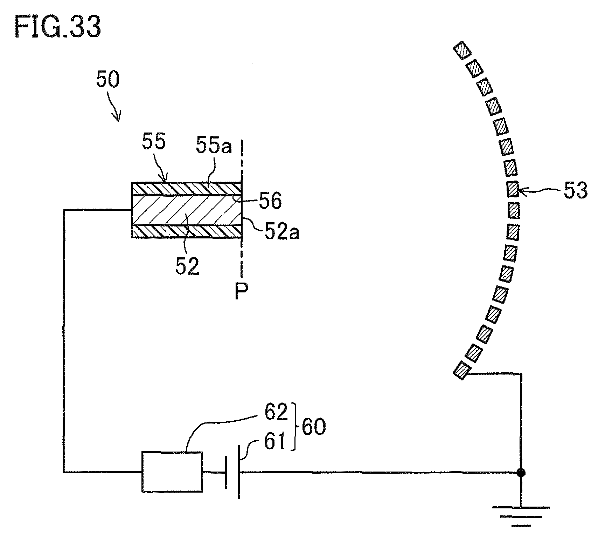

The discharge unit (50) illustrated in FIG. 33 has a configuration of the counter electrode (53) different from that of the foregoing embodiment. The counter electrode (53) of a seventh variation is formed in a net-like pattern or a grid pattern in which a plurality of holes intersect each other, so as to have a bowl-like outer shape or a hemispherical outer shape. The counter electrode (53) is arranged so that a top portion, i.e., a center portion of the counter electrode (53) is positioned on an extension of a longitudinal direction of the rod-shaped discharge electrode (52). Thus, distances from the exposure portion (52a) of the discharge electrode (52) to the counter electrode (53) are substantially equal to each other across an entire area of an inner wall of the counter electrode (53).

In the discharge unit (50) of the seventh variation, the electric discharge is generated from the tip end (exposure portion (52a)) of the discharge electrode (52) to the inner wall of the counter electrode (53) in a radial pattern or a flare pattern. Thus, the high-concentration active species can be generated across a relatively-large area, the purification efficiency of water of the water tank (41) can be improved.

### <Other Variations of Third Embodiment>

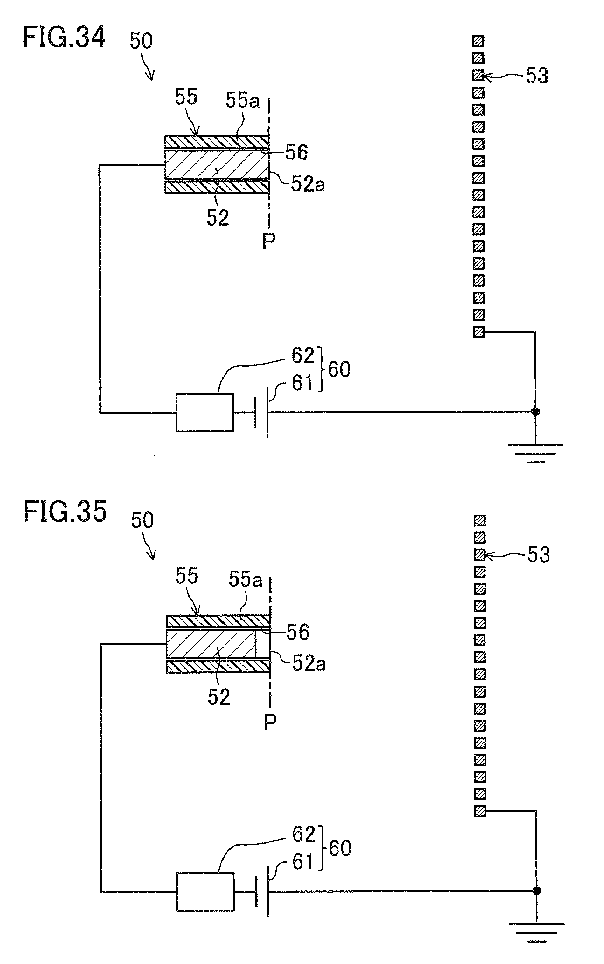

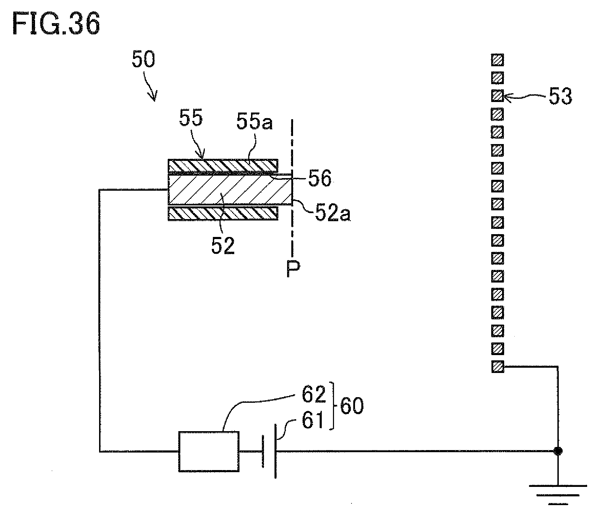

In the foregoing embodiment (including the variations), the insulating member (55) covering part of the discharge electrode (52) contacts the discharge electrode (52). However, as illustrated in, e.g., FIGS. 34-36, a slight clearance may be formed between the discharge electrode (52) and the insulating member (55) while covering part of the discharge electrode (52) by the insulating member (55).

The insulating member (55) of the foregoing embodiment covers part of the discharge electrode (52) so that the exposure portion (52a) of the discharge electrode (52) faces the counter electrode (53). However, if the electric discharge from the discharge electrode (52) to the counter electrode (53) is allowed, the exposure portion (52a) of the discharge electrode (52) is not necessarily arranged so as to face the counter electrode (53). Note that the counter electrode (53) is provided on an outer circumferential side of the cylindrical insulating member (55) and is formed in a ring shape.

### <<Fourth Embodiment of the Invention>>

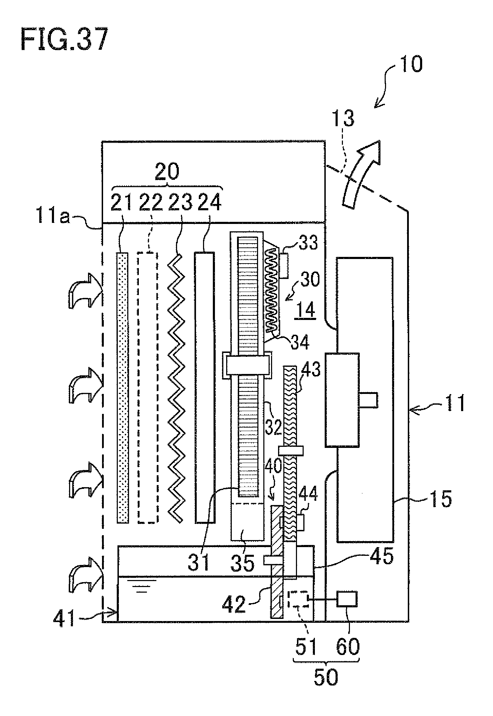

A humidity control device (10) of a fourth embodiment is configured by providing an air dehumidification function to the humidity control device of the first embodiment. That is, in the humidity control device (10) of the fourth embodiment illustrated in FIG. 37, a dehumidification unit (30) is provided in addition to the air purification unit (20) and the humidification unit (40) of the first embodiment.

The dehumidification unit (30) is provided upstream the humidification unit (40) in an air path (14). The dehumidification unit (30) includes a dehumidification rotor (31), a rotor case (32), a circulation fan (33), and a dehumidification heater (34).

The dehumidification rotor (31) serves as a dehumidification section for trapping moisture in air to dehumidify air. The dehumidification rotor (31) of the second embodiment is a so-called "rotary adsorption rotor." That is, the dehumidification rotor (31) is configured by supporting an adsorbent (e.g., zeolite) on a surface of a base material of a honeycomb structure through which air can circulate. The dehumidification rotor (31) is rotatable with a rotary shaft driven by a drive mechanism such as a motor.

A circular opening (not shown in the figure) is formed closer to an upper portion of the rotor case (32). The rotor case (32) rotatably holds the dehumidification rotor (31) in the circular opening. This allows air flowing through the air path (14) to pass through the dehumidification rotor (31) through the circular opening. In the rotor case (32), a circulation path (35) through which air for recovering the adsorbent of the dehumidification rotor (31) flows is formed. The circulation path (35) is formed around the dehumidification rotor (31), and the circulation fan (33) and the dehumidification heater (34) are provided so as to cross the circulation path (35). That is, air delivered by the circulation fan (33) in the circulation path (35) is heated by the dehumidification heater (34), and then passes through a recovery section of the dehumidification rotor (31). In such a manner, moisture of the adsorbent of the dehumidification rotor (31) is desorbed, and the adsorbent is recovered. The air desorbing moisture from the adsorbent of the dehumidification rotor (31) flows in a lower portion of the rotor case (32). In such a state, the air flowing through the circulation path (35) is cooled by air flowing through the air path (14). This allows condensation of water vapor contained in the air of the circulation path (35), thereby generating condensation water. The condensation water is sent to a water tank (41) through a condensation water path which is not shown in the figure.

As described above, in the humidity control device (10) of the fourth embodiment, water trapped by the dehumidification rotor (31) is collected in the water tank (41). That is, the humidity control device (10) of the fourth embodiment is configured so that water collected by the dehumidification rotor (31) can be used as humidification water. The air from which the condensation water is generated in the circulation path (35) is re-heated by the dehumidification heater (34), and is used for recovering the adsorbent of the dehumidification rotor (31).

In the humidity control device (10) of the fourth embodiment, a discharge unit (50) similar to that of the first embodiment is also provided (see FIG. 3). That is, the discharge unit (50) of the fourth embodiment includes a discharge section (51) and a power supply unit (60) similar to those of the first embodiment. In other words, in the fourth embodiment, a high-voltage DC power supply (61) is also used as a power supply section, and a current density concentration section (70) for improving a current density of a current path of a pair of electrodes (52, 53) is also provided.

### Operation

The humidity control device (10) of the fourth embodiment is configured so that a dehumidification operation performed while purifying air and a humidification operation performed while purifying air can be performed. The humidification operation of the humidity control device (10) of the forth embodiment is substantially the same as that of the first embodiment. Thus, the dehumidification operation of the humidity control device (10) of the fourth embodiment will be described below.

### <Dehumidification Operation>

In the dehumidification operation, the dehumidification rotor (31) rotates while placing the dehumidification heater (34) in a conduction state. On the other hand, the humidification rotor (43) is not rotatably driven, and therefore a water wheel (42) rotating in synchronization with the humidification rotor (43) is also stopped. By operating a centrifugal fan (15), room air is injected into the air path (14) through an inlet port (12). At the same time, by operating the circulation fan (33), recovery air circulates in the circulation path (35). In addition, voltage is applied to electrodes of an ionization section (22).

When the centrifugal fan (15) is operated, room air is injected into the air path (14) of a casing (11) through the inlet port (12). The air injected into the air path (14) passes through a prefilter (21), and dust is trapped by the prefilter (21). Then, the air passes through the ionization section (22). In the ionization section (22), corona discharge is generated between a pair of electrodes, and the corona discharge charges dust in air. The air passing through the ionization section (22) passes through a pleated filter (23). The dust charged in the ionization section (22) is electrically attracted to the pleated filter (23) and is trapped by the pleated filter (23). The air passing through the pleated filter (23) flows through a deodorization filter (24). In the deodorization filter (24), components to be treated (odorous substances or harmful substances) contained in air are removed. The air passing through the deodorization filter (24) passes through the dehumidification rotor (31) through the circular opening of the rotor case (32).

A portion of the dehumidification rotor (31), through which air of the air path (14) flows is in a state in which the adsorbent is recovered by recovery air flowing through the circulation path (35). Thus, moisture contained in air flowing through the air path (14) is adsorbed to the adsorbent of the dehumidification rotor (31). As a result, air passing through the dehumidification rotor (31) is dehumidified. The air cleaned and dehumidified in the foregoing manner is supplied to a room through a discharge port (13).

### <Water Purification Operation>

In the dehumidification operation described above, water imparted to air circulating the circulation path (35) is collected in the water tank (41). The water collected in the water tank (41) is also used afterward as humidification water. Thus, in the second embodiment, a water purification operation similar to that of the first embodiment is performed in order to purify water of the water tank (41).

That is, as illustrated in FIG. 3, in the water purification operation, voltage is applied from the DC powder supply (61) to the pair of electrodes (52, 53), thereby generating electric discharge between the discharge electrode (52) and the counter electrode (53). In such a state, since the current density of the current path is higher in an aperture space (73) of a cover member (71), the electric discharge can be stably generated from the discharge electrode (52) to the counter electrode (53).

Needless to say, a discharge unit (50) of each of the foregoing variations or a combination thereof may be employed for the humidity control device (10) of the fourth embodiment.

### <<Fifth Embodiment of the Invention>>

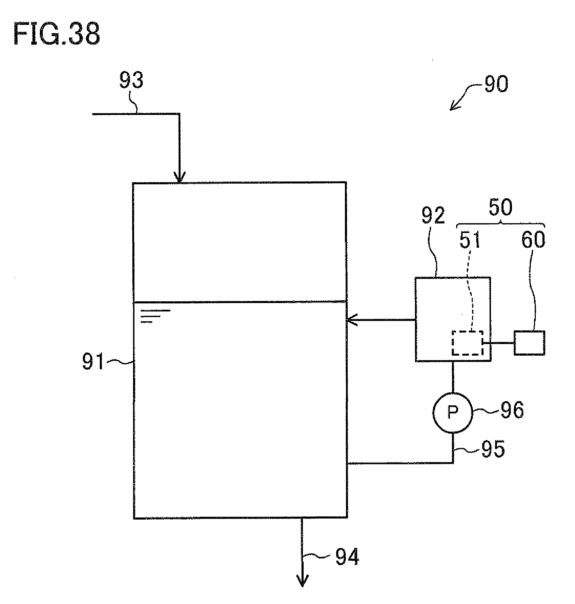

In a fifth embodiment, the discharge unit (50) of the first embodiment is applied to a water heater (90). The water heater (90) is for supplying hot water to, e.g., a water system and a bath. As illustrated in FIG. 38, the water heater (90) includes a water supply tank (91) in which water (hot water) is stored, and a sub-tank (92) in which water is purified. A water inlet path (93), a water outlet path (94), and a water circulation path (95) are connected to the water supply tank (91).

An outlet end of the water inlet path (93) is connected to a top portion of the water supply tank (91). A heating unit (not shown in the figure) is provided on an inlet side of the water inlet path (93). That is, the water inlet path (93) is a path through which water (hot water) heated by the heating unit is supplied to the water supply tank (91), Note that, in the present embodiment, a radiator of a heat pump device for performing a refrigeration cycle using carbon dioxide is used as the heating unit.

The water outlet path (94) is connected to a bottom portion of the water supply tank (91). The water outlet path (94) is a path through which hot water stored in the water supply tank (91) is supplied to a predetermined supply source (e.g., a faucet of a bath or a water system).

An inlet end of the water circulation path (95) is connected to a lower portion of the water supply tank (91), and an outlet end of the water circulation path (95) is connected to a middle portion of the water supply tank (91). A circulation pump (96) and the sub-tank (92) are connected to the water circulation path (95). The circulation pump (96) is for sending water of the water supply tank (91) to the sub-tank (92), and re-sending water of the sub-tank (92) to the water supply tank (91). The sub-tank (92) temporarily stores water circulating through the water circulation path (95) and purifies the stored water.

The water heater (90) of the fifth embodiment includes a liquid treatment discharge unit (50) similar to that of each of the foregoing embodiments. In addition, in the sub-tank (92), a discharge section (51) similar to that of each of the foregoing embodiments is provided (see, e.g., FIG. 3). Further, in the water heater (90), a DC power supply (61) for applying high DC voltage to a pair of electrodes (52, 53) of the discharge section (51) is provided.

In the fifth embodiment, when high DC voltage is applied from the DC power supply (61) to the pair of electrodes (52, 53), the electric discharge is stably generated between the pair of electrodes (52, 53). As a result, a large amount of active species is generated in the sub-tank (92), and the active species purify water of the sub-tank (92). The water purified in the sub-tank (92) in the foregoing manner is sent to the water supply tank (91). Consequently, cleanliness of water of the water supply tank (91) is maintained in the water heater (90) of the present embodiment.

Needless to say, a discharge unit (50) of each of the foregoing embodiments or a combination thereof may be employed for the water heater (90) of the fifth embodiment.

### <<Sixth Embodiment of the Invention>>

A sixth embodiment is one example of a water heater (hot-water supply system (90)) different from those of the foregoing embodiments.

### <Configuration of Hot-Water Supply System>

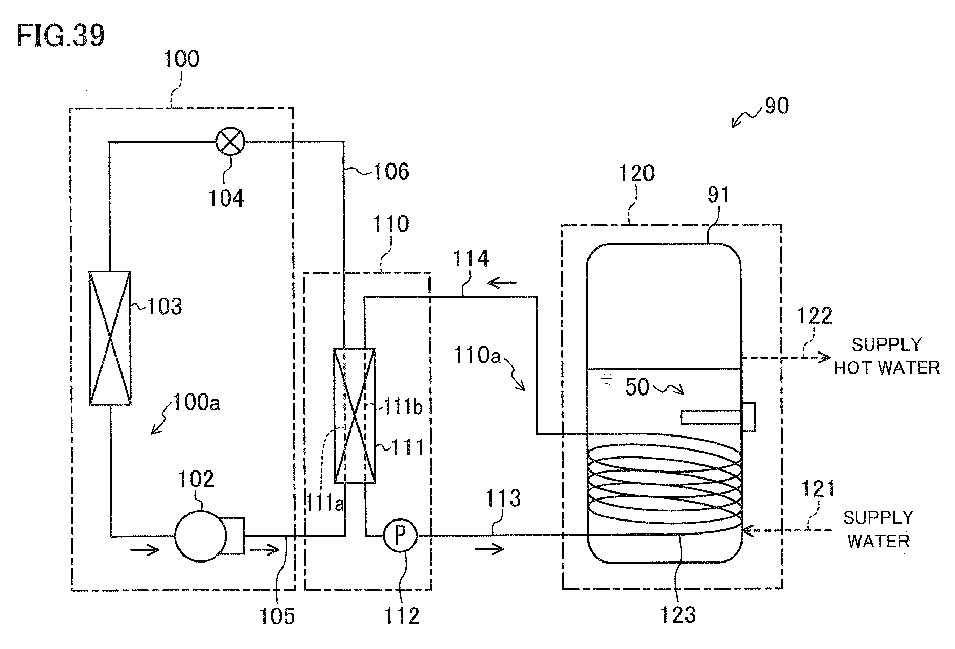

As illustrated in FIG. 39, the hot-water supply system (90) includes an outdoor unit (100), a circulation unit (110), and a hot-water supply unit (120). The outdoor unit (100) is arranged outside a room, and the circulation unit (110) and the hot-water supply unit (120) are arranged inside the room.

In the outdoor unit (100), a compressor (102), an outdoor heat exchanger (103), and an expansion valve (104) are provided. In the circulation unit (110), an internal heat exchanger (111) and a circulation pump (112) are provided. In the hot-water supply unit (120), a hot-water supply tank (91) and a heating coil (123) are provided.

An inlet side of the compressor (102) is connected to an inlet end of a first path (111a) of the internal heat exchanger (111) through a first communication pipe (105). An outlet end of the first path (111a) is connected to the expansion valve (104) through a second communication pipe (106). As described above, in the water heater (90), a refrigerant circuit (100a) in which refrigerant circulates to perform a refrigeration cycle is configured by connecting the compressor (102), the first path (111a) of the internal heat exchanger (111), the expansion valve (104), and the outdoor heat exchanger (103) together to form a closed circuit.

The internal heat exchanger (111) includes the first path (111a) and a second path (111b), and exchanges heat between fluid flowing through both of the paths (111a, 111b). An outlet end of the second path (111b) is connected to an inlet end of the heating coil (123) through the circulation pump (112) and a third communication pipe (113). An outlet end of the heating coil (123) is connected to an inlet end of the second path (111 b) through a fourth communication pipe (114). As described above, in the hot-water supply system (90), a circulation circuit (110a) in which water circulates as a heat medium is configured by connecting the second path (111b) of the internal heat exchanger (111), the circulation pump (112), and the heating coil (123) to form a closed circuit.

The hot-water supply tank (91) is a hermetic container having a substantially cylindrical shape. A water supply line (121) and a hot-water supply line (122) are connected to the hot-water supply tank (91). In addition, the heating coil (123) is provided closer to a bottom portion of the hot-water supply tank (91). The heating coil (123) is a spiral heat transfer pipe formed along an inner circumferential wall of the hot-water supply tank (91).

A liquid treatment discharge unit (50) is arranged inside the hot-water supply tank (91). The liquid treatment discharge unit (50) of the present embodiment is formed in a flange-like shape in which the liquid treatment discharge unit (50) penetrates a side wall of the hot-water supply tank (91) and is supported by the side wall.

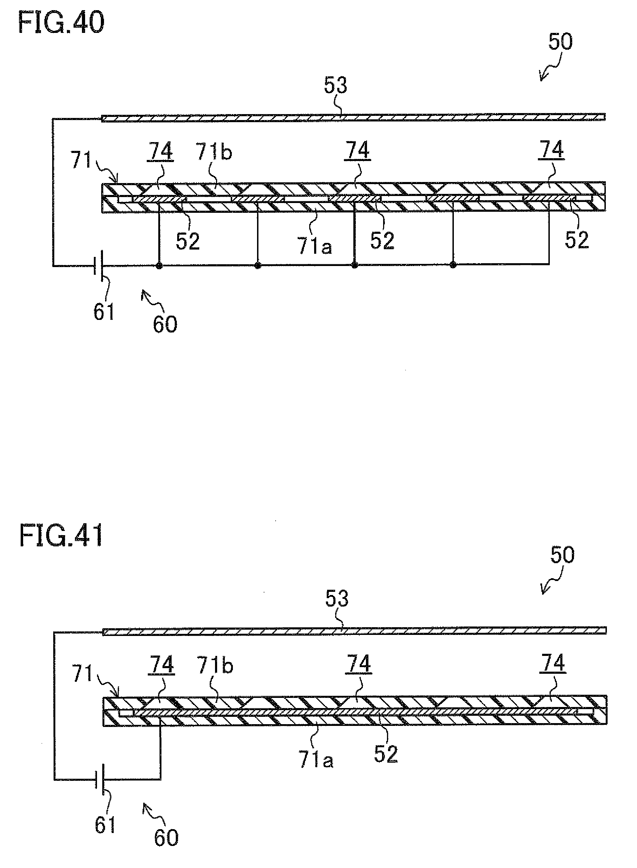

As illustrated in FIG. 40, the liquid treatment discharge unit (50) of the present embodiment includes a plurality of discoid discharge electrodes (52), a flat plate-shaped or rod-shaped counter electrode (53), and a cover member (71) made of an insulating material. The discharge electrodes (52) are arranged inside the cover member (71). Each of the discharge electrodes (52) is formed in a discoid shape with flat upper and lower portions, and the discharge electrodes (52) are arranged at predetermined intervals in the horizontal direction. Each of the discharge electrodes (52) is connected to a positive pole side of a power supply (61) in parallel. Note that, in the present embodiment, five discharge electrodes (52) are arranged. The counter electrode (53) is formed in a rod-like shape or a flat plate shape extending in an arrangement direction of the discharge electrodes (52). The counter electrode (53) is arranged with a predetermined clearance from each of the discharge electrodes (52).

The cover member (71) includes a flat dish-shaped box portion (71a) opening at the top, and a lid portion (71b) closing the opening at the top of the box portion (71 a). In the cover member (71), the lid portion (71b) is fixed on the top of the box portion (71a) so as to sandwich the plurality of discharge electrodes (52). In the lid portion (71 b), a plurality (five) of through-holes (74) are formed corresponding to the plurality of discharge electrodes (52). Thus, each of the discharge electrodes (52) is exposed to the counter electrode (53) through each of the through-holes (74). The through-hole (74) of the present embodiment is formed in a substantially trapezoidal conical shape in which an opening on an upper end side has a diameter smaller than that on a lower end side. That is, the through-hole (74) has an opening area gradually decreased toward the top.

### Operation of Hot-Water Supply System

When the hot-water supply system (90) is operated, the compressor (102) and the circulation pump (112) are in operation, and the degree of opening of the expansion valve (104) is adjusted as necessary. Refrigerant compressed in the compressor (102) flows through the first path (111a) of the internal heat exchanger (111). This allows condensation of the refrigerant of the first path (111a) in the internal heat exchanger (111). Meanwhile, condensation heat of the refrigerant is imparted to circulation water of the second path (111b). The pressure of the refrigerant condensed in the internal heat exchanger (111) is reduced by the expansion valve (104), and then such refrigerant flows into the outdoor heat exchanger (103). In the outdoor heat exchanger (103), the refrigerant is evaporated by dissipating heat to outdoor air. The refrigerant evaporated in the outdoor heat exchanger (103) is recompressed in the compressor (102).

In the circulation circuit (110a), the circulation water heated in the second path (111b) of the internal heat exchanger (111) is delivered by the circulation pump (112) and is sent to the heating coil (123). Thus, water of the hot-water supply lank (91) is heated by the water (hot water) flowing through the heating coil (123). The water dissipating heat in the heating coil (123) is sent to the second path (111b) of the internal heat exchanger (111) and is re-heated. In the foregoing manner, hot water is generated in the hot-water supply tank (91). The hot water generated in the hot-water supply tank (91) is supplied to a utilization target such as a bath and a water system.

In the present embodiment, a water purification operation by the liquid treatment discharge unit (50) is performed inside the hot-water supply tank (91). In the water purification operation, high DC voltage is applied from a power supply (60) to each of the discharge electrodes (52). In such a manner, electric discharge is generated from each of the discharge electrodes (52) to the counter electrode (53). In the present embodiment, the through-holes (74) which are aperture spaces are formed on an electric discharge generation side of the discharge electrode (52) by the cover member (71), and a cross-sectional area of a current path is decreased. Thus, in the through-holes (74), a current density is considerably increased. Consequently, spreading of current to surround is avoided near the discharge electrodes (52), and field intensity is increased near the discharge electrodes (52). As a result, the electric discharge is stably generated from each of the discharge electrodes (52) to the counter electrode (53).

In the fifth embodiment, the plurality of discharge electrodes (52) are embedded in the cover member (71). However, as illustrated in, e.g., FIG. 41, a single flat plate-shaped discharge electrode (52) may be embedded in the cover member (71), and predetermined portions of the discharge electrode (52) may be exposed to the counter electrode (53) through the plurality of through-holes (74). In addition, an opening width of the opening (upper end of the through-hole (74)) of the through-hole (74) of the present embodiment, which has the minimum diameter is preferably equal to or greater than 0.02 mm and equal to or less than 0.5 mm.

### <<Other Embodiment>>

The foregoing embodiments (including the variations) may have the following configurations.

The cover member (71) of the foregoing embodiments does not necessarily contact the discharge electrode (52) as long as the cover member (71) covers part of the discharge electrode (52). In such a case, the current density in the current path can be increased by covering part of the discharge electrode (52).

The cover member (71) of the foregoing embodiments covers part of the discharge electrode (52) corresponding to the discharge electrode (52). However, the cover member (71) may cover part of the counter electrode (53) corresponding to the counter electrode (53). That is, the current density of the current path can be also increased by covering a portion near the counter electrode (53) by the cover member (71). Further, both of the discharge electrode (52) and the counter electrode (53) may be covered by the cover member (71).

The cover member (71) of the foregoing embodiments covers the discharge electrode (52) so that part of the discharge electrode (52) faces the counter electrode (53). However, part of the discharge electrode (52) does not necessarily face the counter electrode (53) as long as the current path can be ensured between the discharge electrode (52) and the counter electrode (53).

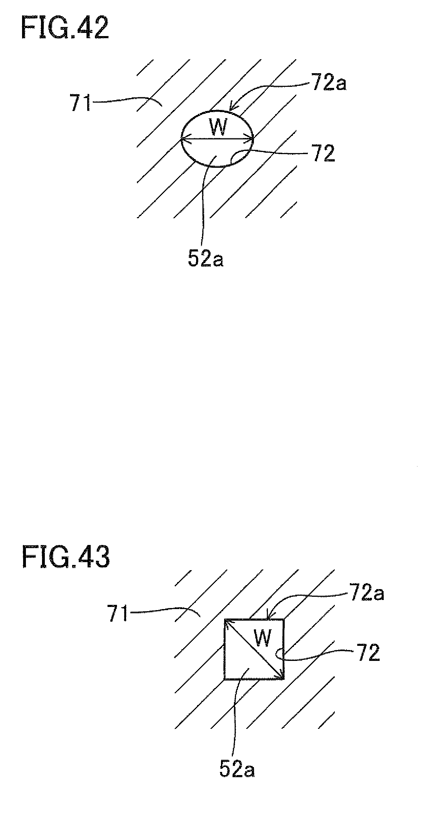

The shape of the opening (72a) formed in the cover member (71) of the foregoing embodiments is not limited to the true circular shape. That is, the shape of the opening (72a) may be, e.g., an oval shape illustrated in FIG. 42 or a rectangular shape illustrated in FIG. 43. Note that, if the opening (72a) has such a shape, the opening width W (i.e., the maximum opening length) of the opening (72a) may be preferably equal to or greater than 0.02 mm and equal to or less than 0.5 mm, and more preferably equal to or greater than 0.02 mm and equal to or less than 0.3 mm.

In the discharge unit (50) of the foregoing embodiments, in a state in which the discharge electrode (52) is at positive potential and the counter electrode (53) is at negative potential, positive electric discharge is generated from the discharge electrode (52) to the counter electrode (53). However, in a state in which the discharge electrode (52) is at negative potential and the counter electrode (53) is at positive potential, negative electric discharge may be generated from the discharge electrode (52) to the counter electrode (53).

In the discharge unit (50) of the foregoing embodiments, the single discharge electrode (52) is provided, but a plurality of discharge electrodes (52) may be provided in the discharge unit (50). In addition, the outer shape of the counter electrode (53) is the substantially plate shape. However, the outer shape of the counter electrode (53) may be, e.g., a linear shape, a rod-like shape, or a dot-like shape. Similarly, the discharge electrode (52) may be formed in a dot-like shape or a plate shape.

### INDUSTRIAL APPLICABILITY

As described above, the present invention is useful for the liquid treatment discharge unit for generating electric discharge in liquid to purify the liquid, and the humidity control device and the water heater each including the liquid treatment discharge unit.

### DESCRIPTION OF REFERENCE CHARACTERS

- 10: Humidity Control Device
- 31: Dehumidification Rotor (Dehumidification Section)
- 41: Water Tank (Storage Section)
- 43: Humidification Rotor (Humidification Section)
- 50: Discharge Unit (Liquid Treatment Discharge Unit)
- 52: Discharge Electrode (A Pair Of Electrodes)
- 52a: Exposure Portion
- 53: Counter Electrode (A Pair Of Electrodes)
- 55: Insulating Member
- 55a: Outer Circumferential Covering Portion
- 55b: Tip End Covering Portion
- 56: Opening
- 61: Electrode Section (Dc Power Supply)
- 70: Current Density Concentration Section
- 71: Cover Member (Current Density Concentration Section, Insulating Member)
- 71a: Box Portion (Current Density Concentration Section, Insulating Member, Blocking Member)
- 72: Engagement Groove
- 72a: Opening
- 72b: Opening Plane
- 74: Through-Hole (Opening)
- 75: Case (Current Density Concentration Section, Insulating Member)
- 77: Blocking Plate (Current Density Concentration Section, Insulating Member, Blocking Member)
- 80: Air Bubble Generation Section (Current Density Concentration Section)
- 84: Air Bubble Holding Plate (Air Bubble Holding Section)
- 85: Heat Insulating Member
- 90: Water Heater
- 91: Water Supply Tank
- B: Air Bubble Generation Region

## Claims

1. A liquid treatment discharge unit including a pair of electrodes (52, 53) provided in liquid and a power supply section (61) configured to apply voltage to the pair of electrodes (52, 53) to generate electric discharge between the pair of electrodes (52, 53), in which the power supply section (61) is a high-voltage DC power supply (61), the liquid treatment discharge unit, comprising:
a current density concentration section (70) for increasing a current density of a current path between the pair of electrodes (52, 53).

2. The liquid treatment discharge unit of claim 1, wherein
the pair of electrodes (52, 53) is configured so that air bubbles are generated by Joule heat generated in association with the electric discharge of the pair of electrodes (52, 53) and electric discharge is also generated in the air bubbles.

3. The liquid treatment discharge unit of claim 1, wherein
the current density concentration section is configured by an insulating member (50, 71, 71a, 75, 77) arranged near the current path between the pair of electrodes (52, 53).

4. The liquid treatment discharge unit of claim 3, wherein
the insulating member is a cover member (71) covering part of at least one (52) of the pair of electrodes (52, 53).

5. The liquid treatment discharge unit of claim 4, wherein
the cover member (71) is formed in a cylindrical shape opening at at least one end in an axial direction, and
the electrode (52) covered by the cylindrical cover member (71) is formed in a rod shape fitted into the cylindrical cover member (71).

6. The liquid treatment discharge unit of claim 5, wherein
the rod-shaped electrode (52) is arranged so that a tip end of the electrode (52) is inwardly recessed relative to an opening plane (72b) on one end side of the cylindrical cover member (71).

7. The liquid treatment discharge unit of claim 4, wherein
a plurality of through-holes (74) are formed in the cover member (71) as openings.

8. The liquid treatment discharge unit of claim 3, wherein
the insulating member is a blocking member (71a, 77) arranged so as to separate the pair of electrodes (52, 53) and provided with a through-hole (74) forming the current path between the pair of electrodes (52, 53) as an opening.

9. The liquid treatment discharge unit of claim 5, wherein
the cover member (71) is arranged so that an opening on one end side of the cover member (71) faces downward.

10. The liquid treatment discharge unit of claim 3, wherein
the insulating member (50) is provided with at least one opening (56) through which part of the discharge electrode (52) is exposed.

11. The liquid treatment discharge unit of claim 10, wherein
an exposure portion (52a) of the discharge electrode (52) is positioned on an inner side relative to an end plane of the opening (56) of the insulating member (55).

12. The liquid treatment discharge unit of claim 10, wherein
an exposure portion (52a) of the discharge electrode (52) is positioned on the substantially same plane as an end plane of the opening (56) of the insulating member (55).

13. The liquid treatment discharge unit of claim 10, wherein
an exposure portion (52a) of the discharge electrode (52) is positioned on an outer side relative to an end plane of the opening (56) of the insulating member (55).

14. The liquid treatment discharge unit of claim 10, wherein
a plurality of openings (56) are formed in the insulating member (50).

15. The liquid treatment discharge unit of claim 14, wherein
the discharge electrode (52) is formed in a rod shape or a linear shape, and
the insulating member (55) includes an outer circumferential covering portion (55a) covering an outer circumferential surface of the discharge electrode (52), and a tip end covering portion (55b) covering a tip end surface of the discharge electrode (52) and provided with the plurality of openings (56).

16. The liquid treatment discharge unit of claim 14, wherein
the discharge electrode (52) is formed in a rod shape or a linear shape, and
the insulating member (55) includes an outer circumferential covering portion (55a) covering an outer circumferential surface of the discharge electrode (52) and provided with the plurality of openings (56), and a tip end covering portion (55b) covering a tip end surface of the discharge electrode (52).

17. The liquid treatment discharge unit of any one of claims 5-16, wherein
an opening width of the opening (50, 72a, 74, 75a, 75b) is equal to or less than 0.5 mm.

18. The liquid treatment discharge unit of any one of claims 5-16, wherein
an opening width of the opening (50, 72a, 74, 75a, 75b) is equal to or greater than 0.02 mm.

19. The liquid treatment discharge unit of claim 3, wherein
the insulating member is a case (75) in which the pair of electrodes (52, 53) are accommodated and a communication port (75a, 75b) through which liquid can circulate is formed.

20. The liquid treatment discharge unit of claim 3, wherein
the insulating member (50, 71, 71a, 75, 77) is made of a ceramic material.

21. The liquid treatment discharge unit of claim 1, wherein
the current density concentration section (70) is an air bubble generation section (80) configured to supply air bubbles to the current path between the pair of electrodes (52, 53).

22. The liquid treatment discharge unit of claim 2, further comprising:
an air bubble holding section (84) configured to hold air bubbles generated in association with the electric discharge.

23. The liquid treatment discharge unit of claim 2, further comprising:
a heat insulating member (85) arranged so as to surround the current path between the pair of electrodes (52, 53).

24. The liquid treatment discharge unit of any one of claims 1-3, wherein
the power supply section (61) provides a potential difference to the pair of electrodes (52, 53) so that potential of the counter electrode (53) is lower than that of the discharge electrode (52).

25. The liquid treatment discharge unit of any one of claims 1-3, wherein
streamer discharge is generated from the discharge electrode (52) to the counter electrode (53).

26. A humidity control device, comprising:
a storage section (41) configured to store water;
a humidification section (43) configured to impart the water of the storage section (41) to air; and
a liquid treatment discharge unit (50) configured to purify the water of the storage section (41),
wherein the liquid treatment discharge unit (50) is the liquid treatment discharge unit of any one of claims 1-3.

27. A humidity control device, comprising:
a dehumidification section (31) configured to dehumidify air by trapping moisture in the air;
a storage section (41) configured to collect the water trapped by the dehumidification section (31); and
a liquid treatment discharge unit (50) configured to purify the water of the storage section (41),
wherein the liquid treatment discharge unit (50) is the liquid treatment discharge unit (50) of any one of claims 1-3.

28. A water heater, comprising:
a water supply tank (91) configured to store heated water; and
a liquid treatment discharge unit (50) configured to purify the water of the water supply tank (91),
wherein the liquid treatment discharge unit (50) is the liquid treatment discharge unit (50) of any one of claims 1-3.
